# EUROPEAN PATENT APPLICATION

(11) **EP 4 621 860 A1**
(43) Date of publication of application: **24.09.2025**
(21) Application number: 23946369.8
(22) Date of filing: 20.09.2023
(51) Int. Cl.: H01M 4/13, H01M 10/0525, H01M 10/054

(54) **ELECTRODE SHEET AND PREPARATION METHOD THEREFOR, BATTERY CELL, BATTERY, AND ELECTRIC DEVICE**

(30) Priority: 24.07.2023 CN 202310906054
(71) Applicant: Contemporary Amperex Technology Co., Limited, Ningde, Fujian 352100 (CN)
(72) Inventor: WU, Kai, Ningde, Fujian 352100 (CN); JI, Xing, Ningde, Fujian 352100 (CN)
(74) Representative: Kraus & Lederer PartGmbB
(86) International application number: PCT/CN2023/120116
(87) International publication number: WO 2025/020288

(57) **Abstract**

An electrode plate, a preparation method therefor, a battery cell, a battery, and a power consuming apparatus are provided, and belong to the field of battery technologies. The electrode plate includes a current collector and first insulation layers. The current collector includes a main body part and a tab. The tab extends from a first end of the main body part. The first end is one end of the main body part along a first direction. The tab includes a first part and a second part. The first part is closer to the main body part than the second part. The first insulation layers are disposed on surfaces of two sides of the first part. A ratio L of a thickness of the first insulation layers to a thickness of the first part satisfies: L≤1.3.

## Description

### CROSS-REFERENCE TO RELATED APPLICATIONS

The present application claims priority to Chinese Patent Application No. 202310906054.3, filed with the China National Intellectual Property Administration on July 24, 2023 and entitled "ELECTRODE PLATE, PREPARATION METHOD THEREFOR, BATTERY CELL, BATTERY, AND POWER CONSUMING APPARATUS", which is incorporated herein by reference in its entirety.

### TECHNICAL FIELD

The present application relates to the field of battery technologies, and in particular, to an electrode plate, a preparation method therefor, a battery cell, a battery, and a power consuming apparatus.

### BACKGROUND

As environmental pollution is increasingly worsened, a new energy industry is increasingly concerned. In the new energy industry, battery technologies are an important factor related to development of the new energy industry.

Design factors in many aspects need to be considered for development of the battery technologies, such as an energy density, a cycle life, and reliability. A design of an electrode plate in a battery cell is crucial to reliability of the battery cell. Therefore, how to provide an electrode plate to improve the reliability of the battery cell is a technical problem that needs to be resolved urgently.

### SUMMARY

The present application is proposed in view of the foregoing problem, and an objective of the present application is to provide an electrode plate to improve reliability of a battery cell.

To achieve the foregoing objective, the present application provides an electrode plate, a preparation method therefor, a battery cell, a battery, and a power consuming apparatus.

According to a first aspect, an electrode plate is provided, including a current collector and first insulation layers. The current collector includes a main body part and a tab. The tab extends from a first end of the main body part. The first end is one end of the main body part along a first direction. The tab includes a first part and a second part. The first part is closer to the main body part than the second part. The first insulation layers are disposed on surfaces of two sides of the first part. A ratio L of a thickness of the first insulation layers to a thickness of the first part satisfies: L≤1.3.

This embodiment of the present application provides the electrode plate, and the electrode plate includes the current collector and the first insulation layers. The current collector includes the main body part and the tab. The tab extends from the first end of the main body part. The first end is the end of the main body part along the first direction. The tab includes the first part and the second part. The first part is closer to the main body part than the second part. The first insulation layers are disposed on the surfaces of the two sides of the first part. In this way, a risk generated when the first part overlaps an electrode having a polarity opposite to that of the first part can be reduced. The ratio L of the thickness of the first insulation layers to the thickness of the first part satisfies: L≤1.3. In this way, the first insulation layers have a small thickness, and a total thickness of the first insulation layers and the first part is small, to facilitate bending of the tab. In this way, risks such as a short circuit caused when the tab is inserted into an electrode assembly in a battery cell after being bent can be reduced, to help improve reliability of the battery cell.

In a possible implementation, the ratio L of the thickness of the first insulation layers to the thickness of the first part satisfies: L≤1. In this way, the first insulation layers have a smaller thickness, to help further reduce the risks such as the short circuit caused when a part of the tab is inserted into the electrode assembly in the battery cell after the tab is bent.

In a possible implementation, L satisfies: 1/30≤L≤1. In this way, the first insulation layers have an appropriate thickness, to facilitate preparation of the first insulation layers. In addition, when the first insulation layers include a thermoplastic polymer, L is greater than or equal to 1/30. The first insulation layers include a large quantity of thermoplastic polymers, so that an appropriate quantity of thermoplastic polymers are melted and flow to an end surface, to form uniform and dense second insulation layers on the end surface.

In a possible implementation, L satisfies: 4/13≤L≤6/13. In this way, the preparation of the first insulation layers can be facilitated, and the risk that the tab is inserted into the electrode assembly after being bent is further reduced.

In a possible implementation, the thickness d1 of the first insulation layers satisfies: d1≤10 µm. In this way, the thickness of the first insulation layers is small, to facilitate bending of the first part of the tab. In a battery cell including the electrode plate, risks such as a short circuit caused when the tab is inserted into an electrode assembly in the battery cell after being bent can be reduced, to help improve reliability of the battery cell.

In a possible implementation, d1 satisfies: 0.5 µm≤d1≤10 µm. When the thickness d1 of the first insulation layers is not less than 0.5 µm, difficulty in preparing the first insulation layers is reduced. When the thickness d1 of the first insulation layers does not exceed 10 µm, the first insulation layers have a small thickness, so that difficulty in bending the tab can be further reduced.

In a possible implementation, d1 satisfies: 4 µm≤d1≤6 µm. When the thickness d1 of the first insulation layers is not less than 4 µm, the difficulty in preparing the first insulation layers is further reduced. When the thickness d1 of the first insulation layers does not exceed 6 µm, the first insulation layers have a small thickness, so that the difficulty in bending the tab can be further reduced.

In a possible implementation, the first insulation layers on the surfaces of the two sides of the first part have a same thickness. The two insulation layers on the surfaces of the two sides have the same thickness. In this way, force applied to the two sides of the first part is uniform, and the preparation of the first insulation layers is further facilitated.

In a possible implementation, the main body part includes a coating region and a transition region. The transition region is disposed between the coating region and the tab, and the first insulation layers are disposed on surfaces of two sides of the transition region. The first insulation layers are disposed on the surfaces of the transition region, to help reduce risks such as a short circuit generated when the transition region overlaps an electrode having a polarity opposite to that of the transition region.

In a possible implementation, the electrode plate further includes an active material layer, and the active material layer is disposed on a surface of at least one side of the coating region. The active material layer is located on the surface of the at least one side of the coating region, and the active material layer is not cut in a cutting process, so that a risk that the active material layer falls off can be reduced. In addition, the active material layer is disposed, so that the battery cell can perform a charging and discharging operation, to help normal running of the battery cell.

In a possible implementation, the first insulation layers include a thermoplastic polymer.

In the foregoing technical solution, in a process in which the current collector is cut to prepare the tab, the thermoplastic polymer in the first insulation layers changes from a solid state to a flowing state, and further flows to a bare end surface that is of the current collector and that is generated through cutting. The thermoplastic polymer in the flowing state is solidified after cooling, and can coat a burr and the bare end surface that are generated through cutting. Therefore, a risk generated when the burr and the bare end surface overlaps an electrode having a polarity opposite to that of the burr and the bare end surface can be reduced, to help further improve the reliability of the battery cell.

In a possible implementation, a maximum particle size D¹max of the thermoplastic polymer satisfies: D¹max≤10 µm; and optionally, D¹max satisfies: D¹max≤6 µm. In this way, a risk that a scratch occurs due to a large maximum particle size of the thermoplastic polymer in a process of preparing the first insulation layers can be reduced, and it is beneficial to obtain the first insulation layers with an appropriate thickness, thereby facilitating preparation of the first insulation layers.

In a possible implementation, the first insulation layers further include a binder. The binder is disposed, so that the thermoplastic polymer can be bound to the current collector, thereby reducing a risk that the thermoplastic polymer falls off from the current collector. Optionally, a mass content A of the thermoplastic polymer satisfies: 40 wt%≤A≤80 wt%, and a mass content B of the binder satisfies: 20 wt%≤B≤40 wt% based on a total mass of the first insulation layers. In this way, the thermoplastic polymer and the binder have appropriate mass percentages. On one hand, the binder has an appropriate mass content, and the first insulation layers do not fall off from the current collector. On the other hand, the thermoplastic polymer has an appropriate mass content, to facilitate forming of the uniform and dense second insulation layers on the bare end surface after the cutting.

In a possible implementation the first insulation layers further include inorganic particles. Optionally, the inorganic particles include insulated inorganic particles. Optionally, the insulated inorganic particles include at least one of boehmite and aluminum oxide. The inorganic particles are disposed, so that a surface tension of insulation slurry can be reduced when the thickness of the first insulation layers is small, thereby reducing a risk that the current collector is bare. The insulated inorganic particles do not conduct electricity, so that the first insulation layers have good insulativity. The boehmite or the aluminum oxide has good heat resistance and insulativity. The boehmite or the aluminum oxide is selected as the insulated inorganic particles and added to the first insulation layers, so that the first insulation layers have good heat resistance and insulativity.

In a possible implementation, a mass content C of the inorganic particles satisfies: 0<C≤40 wt% based on the total mass of the first insulation layers; and optionally, C satisfies: 30 wt%≤C≤40 wt%. The mass content of the inorganic particles is properly set, to help reduce the surface tension of the insulation slurry, thereby reducing the risk that the current collector is bare.

In a possible implementation, a maximum particle size D²max of the inorganic particles satisfies: D²max≤10 µm; and optionally, D²max satisfies: D²max≤6 µm. In this way, the inorganic particles have an appropriate particle size, so that a risk that a scratch occurs in a process of preparing the first insulation layers can be reduced, and it is beneficial to obtain the first insulation layers with an appropriate thickness, thereby facilitating preparation of the first insulation layers.

In a possible implementation, a volume particle size distribution Dv50 of the inorganic particles satisfies: 0.5 µm≤Dv50≤6 µm; and optionally, the volume particle size distribution Dv50 of the inorganic particles satisfies: 0.5 µm≤Dv50≤2 µm. In this way, in the process of preparing the first insulation layers, slurry of the first insulation layers has an appropriate viscosity, to facilitate coating of the first insulation layers. In addition, the slurry of the first insulation layers has an appropriate solid content, to facilitate oven drying of the first insulation layers.

In a possible implementation, a melting point of the thermoplastic polymer ranges from 100 °C to 200 °C. In the foregoing technical solution, the thermoplastic polymer has an appropriate melting point. In a process of cutting the current collector on which the first insulation layers are disposed, under an effect of heat generated due to the cutting, the thermoplastic polymer changes from a solid state to a flowing state. The thermoplastic polymer in the flowing state can flow to the end surface of the current collector that is bare after the cutting and the burr generated due to the cutting, to help prepare the second insulation layers.

In a possible implementation, the melting point of the thermoplastic polymer ranges from 100 °C to 130°C. In this way, the second insulation layers are prepared under an effect of low heat.

In a possible implementation, the thermoplastic polymer includes at least one of polystyrene, polyolefin, polyimide, polyester, polyphenylene sulfide, aromatic polyamide, polyamide, a copolymer of butyl acrylate and ethyl methacrylate, and respective modified polymers; and optionally, the polyolefin includes polyethylene wax. The thermoplastic polymer is used, to help form a uniform and dense coating on the burr and the end surface of the current collector that is bare after the cutting.

In a possible implementation, the binder includes at least one of a polyacrylic acid-polyacrylonitrile copolymer, a polyacrylate-polyacrylonitrile copolymer, polyether acrylate, polyacrylic acid, polyacrylonitrile, gelatin, chitosan, and sodium alginate. The binder has good binding performance, to help bind the thermoplastic polymer to a surface of the current collector. Optionally, the binder includes the polyacrylonitrile, and the binder has a good leveling property, to help uniformly coat the first insulation layers on the surface of the current collector.

In a possible implementation, a binding force F between the first insulation layers and the current collector satisfies: 20 N/m≤F≤100 N/m; and optionally, F satisfies: 60 N/m≤F≤90 N/m. In this way, binding between the first insulation layers and the current collector is strong, so that a risk that the first insulation layers fall off from the current collector can be reduced.

In a possible implementation, a ratio of a size k1 of the first insulation layers to a sum k2 of the size of the first insulation layers and a size of the second part along the first direction satisfies: 0.3≤k1:k2≤0.5. When k1:k2 is not less than 0.3, it is beneficial to reduce a risk of a short circuit generated when the first part overlaps an electrode having a polarity opposite to that of the first part. When k1:k2 does not exceed 0.5, it is beneficial to connection between the second part of the tab and an end cover component of the battery cell.

In a possible implementation, the electrode plate further includes second insulation layers. The second insulation layers are disposed on a first end surface, and the first end surface is an end surface of the main body part at the first end. In this way, the second insulation layers can coat the first end surface, to reduce a risk that the first end surface is bare, so that a risk of a short circuit generated when the first end surface overlaps an electrode having a polarity opposite to that of the first end surface can be reduced. In addition, the second insulation layers may further coat the burr generated during the cutting, to reduce a risk that the burr overlaps an electrode having a polarity opposite to that of the burr.

In a possible implementation, a thickness d2 of the second insulation layers ranges from 10 nm to 400 nm. In this way, when the second insulation layers have a small thickness, the burr and the bare first end surface can be well coated. Optionally, the thickness d2 of the second insulation layers ranges from 100 nm to 200 nm. In this way, it is beneficial to further improve a coating effect on the burr and the first end surface.

In a possible implementation, a resistance R of the second insulation layers satisfies: R≥1 Ω; and optionally, R satisfies: 50 Ω≤R≤500 Ω. The resistance of the second insulation layers satisfies the foregoing condition. In this way, a risk that a short circuit occurs in the battery cell when the end surface overlaps an electrode having a polarity opposite to that of the end surface can be reduced.

In a possible implementation, the second insulation layers are disposed on the first end surface and a second end surface. The second end surface is an end surface of two ends of the first part along a second direction, and the second direction is different from the first direction. Optionally, the second direction is perpendicular to the first direction. In this way, the second insulation layers can coat the second end surface that is bare due to the cutting, so that a risk generated when the second end surface overlaps an electrode having a polarity opposite to that of the second end surface can be reduced.

In a possible implementation, a material of the second insulation layers is the same as a material of the thermoplastic polymer in the first insulation layers. In this way, it is beneficial to simplify steps of preparing the electrode plate and accelerate a production rhythm.

In a possible implementation, a thermoplastic polymer in the second insulation layers is in a film-layer shape. In this way, the first insulation layers are formed after the thermoplastic polymer in the second insulation layers is melt and solidified. In this way, it is beneficial to simplify the steps of preparing the electrode plate, and the first insulation layers can be formed during the cutting.

In a possible implementation, a quantity of layers of the tab is greater than or equal to 50; and optionally, a thickness d3 of a first part of each layer of the tab satisfies: 10 µm≤d3≤15 µm.

In a possible implementation, the electrode plate includes a positive electrode plate; and optionally, the current collector includes aluminum foil. In this way, a risk that the positive electrode plate overlaps a negative electrode plate is reduced, to help improve the reliability of the battery cell. In addition, it is beneficial to reduce a risk generated when lithium dendrites separated out from the positive electrode plate and the negative electrode plate overlap. The current collector includes the aluminum foil. In this way, the current collector has a simple structure, to help simplify a process of preparing the current collector.

In a possible implementation, the positive electrode plate includes a positive electrode active material, and the positive electrode active material includes at least one of lithium transition metal oxide and lithium-containing phosphate in an olivine structure. Optionally, the lithium-containing phosphate in the olivine structure includes lithium iron phosphate. Optionally, the lithium transition metal oxide includes LiNi_{0.8}Co_{0.1}Mn_{0.1}O₂.

In a possible implementation, the current collector includes metal foil or a composite current collector. Optionally, the metal foil includes aluminum foil or copper foil. Optionally, the composite current collector includes a polymer material base layer or a metal layer located on at least one surface of the polymer material base layer. Optionally, the current collector includes aluminum foil. In this way, it is convenient to select an appropriate current collector based on an actual requirement.

According to a second aspect, a preparation method for an electrode plate is provided. The method includes: coating insulation slurry in a first region of a current collector, to form first insulation layers in the first region, where a ratio L of a thickness d1 of the first insulation layers to a thickness of a first part satisfies: L≤1.3; and cutting, along cutting lines, the current collector on which the first insulation layers are disposed, where at least a part of the cutting lines are disposed in the first region.

In the foregoing technical solution, the thickness of the first insulation layers is small, so that a part that is of a tab generated after the current collector is cut and on which the first insulation layers are disposed has a small thickness, to reduce difficulty in bending the tab. Therefore, risks of a short circuit and self discharging caused when the tab is inserted into an electrode assembly in a battery cell after being bent can be reduced, to help improve reliability of the battery cell.

In a possible implementation, L satisfies: L≤1; optionally, L satisfies: 1/30≤L≤1; and optionally, 4/13≤L≤6/13.

In a possible implementation, the thickness d1 of the first insulation layers satisfies: d1≤10 µm; optionally, d1 satisfies: 0.5 µm≤d1≤10 µm; and optionally, d1 satisfies: 4 µm≤d1≤6 µm. In this way, difficulty in preparing the first insulation layers is reduced, and the difficulty in bending the tab is further reduced.

In a possible implementation, the insulation slurry includes a thermoplastic-polymer emulsion and a binder. Optionally, a mass content A of a thermoplastic polymer in the thermoplastic-polymer emulsion in the insulation slurry satisfies: 40 wt%≤A≤80 wt%, and a mass content B of the binder satisfies: 20 wt%≤B≤40 wt% based on a total mass of the insulation slurry. The mass content of the thermoplastic polymer is properly set, to help form uniform and dense second insulation layers at a bare section of the current collector that is generated through cutting. The mass content of the binder is properly set, to help reduce a risk that the first insulation layers fall off from the current collector.

In a possible implementation, a maximum particle size D¹max of the thermoplastic polymer satisfies: D¹max≤10 µm; and optionally, D¹max satisfies: D¹max≤6 µm. In this way, a risk that a scratch occurs due to a large maximum particle size of the thermoplastic polymer in a process of preparing the first insulation layers can be reduced, thereby facilitating preparation of the first insulation layers.

In a possible implementation, a volume particle size distribution Dv50 of the inorganic particles satisfies: 0.5 µm≤Dv50≤6 µm; and optionally, the volume particle size distribution Dv50 of the inorganic particles satisfies: 0.5 µm≤Dv50≤2 µm. In this way, in the process of preparing the first insulation layers, slurry of the first insulation layers has an appropriate viscosity, to facilitate coating of the first insulation layers. In addition, the slurry of the first insulation layers has an appropriate solid content, to facilitate oven drying of the first insulation layers.

In a possible implementation, the insulation slurry further includes inorganic particles. The inorganic particles are added to the insulation slurry, so that a surface tension of the insulation slurry can be reduced when the insulation slurry is coated. Therefore, when a coating thickness of the insulation slurry is small, a risk that the current collector is bare when the insulation slurry cracks is reduced. Optionally, the inorganic particles include insulated inorganic particles; and optionally, the insulated inorganic particles include at least one of boehmite and aluminum oxide.

In a possible implementation, a mass content C of the insulated inorganic particles in the insulation slurry satisfies: 0<C≤40 wt%; and optionally, C satisfies: 30 wt%≤B≤40 wt%, based on a total mass of the insulation slurry. The mass content of the insulated inorganic particles is properly set, to help reduce a risk that a surface of the current collector is bare.

In a possible implementation, a maximum particle size D²max of the inorganic particles satisfies: D²max≤10 µm; and optionally, D²max satisfies: D²max≤6 µm.

In a possible implementation, a solid content E of the thermoplastic-polymer emulsion satisfies: 30 wt%≤E≤50 wt%. In this way, it is convenient to prepare the thermoplastic-polymer emulsion.

In a possible implementation, a melting point T of the thermoplastic polymer in the thermoplastic-polymer emulsion ranges from 100 °C to 200 °C; and optionally, the melting point T ranges from 100 °C to 130 °C.

In a possible implementation, the thermoplastic polymer includes at least one of polystyrene, polyolefin, polyimide, polyester, polyphenylene sulfide, aromatic polyamide, polyamide, a copolymer of butyl acrylate and ethyl methacrylate, and respective modified polymers; and optionally, the polyolefin includes polyethylene wax.

In the foregoing technical solution, the thermoplastic polymer has an appropriate melting point. In a process of cutting the current collector on which the first insulation layers are disposed, under an effect of heat generated due to the cutting, the thermoplastic polymer changes from a solid state to a flowing state. The thermoplastic polymer in the flowing state can flow to an end surface of the current collector that is bare after the cutting and a burr generated due to the cutting, to help prepare the second insulation layers. The thermoplastic polymer is used, to help form a uniform and dense coating on the burr and the end surface of the current collector that is bare after the cutting.

In a possible implementation, the binder includes at least one of a polyacrylic acid-polyacrylonitrile copolymer, a polyacrylate-polyacrylonitrile copolymer, polyether acrylate, polyacrylic acid, polyacrylonitrile, gelatin, chitosan, and sodium alginate. The binder has good binding performance, to help bind the thermoplastic polymer to a surface of the current collector.

In a possible implementation, the coating insulation slurry in a first region of a current collector, to form first insulation layers in the first region includes: coating the insulation slurry in the first region of the current collector in a manner of intaglio coating, to form the first insulation layers in the first region. It is convenient to prepare, in the manner of intaglio coating, the first insulation layers having a small thickness.

In a possible implementation, the method further includes: after the insulation slurry is coated in the first region of the current collector, to form the first insulation layers in the first region, coating an active material in a second region of the current collector, to form an active material layer in the second region. In this way, an impact of the active material layer having a large thickness on preparation of the first insulation layers can be reduced, so that it is convenient to prepare, in the manner of intaglio coating, the first insulation layers having a small thickness.

In a possible implementation, the cutting, along cutting lines, the current collector on which the first insulation layers are disposed includes: controlling a laser processing tool to cut, along the cutting lines, the current collector on which the first insulation layers are disposed.

In the foregoing technical solution, the current collector is cut by using laser, and much heat can be generated during the cutting, to help the thermoplastic polymer in the first insulation layers change to the flowing state and flow to the end surface, thereby facilitating forming of the second insulation layers.

According to a third aspect, a battery cell is provided, including the electrode plate in any one of the first aspect and the possible implementations of the first aspect, and/or an electrode plate prepared by using the method in any one of the second aspect and the possible implementations of the second aspect.

According to a fourth aspect, a battery is provided, including the battery cell in the third aspect.

According to a fifth aspect, a power consuming apparatus is provided, including the battery in the fourth aspect.

### BRIEF DESCRIPTION OF THE DRAWINGS

In order to provide a clearer explanation of the technical solution of the embodiments of the present application, a brief introduction will be given to the accompanying drawings required in the embodiments of the present application. It is evident that the accompanying drawings described below are only some embodiments of the present application. For ordinary technical personnel in the art, other accompanying drawings can be obtained based on the drawings without any creative effort.
FIG. 1 is a schematic diagram of an electrode plate before a tab is processed according to an embodiment of the present application;
FIG. 2 is a schematic diagram of an electrode plate according to an embodiment of the present application;
FIG. 3 is a diagram of a cross-section view along a direction A-A in FIG. 2;
FIG. 4 is a diagram of a cross-section view along a direction B-B in FIG. 2;
FIG. 5 is a schematic diagram of a preparation method for an electrode plate according to an embodiment of the present application;
FIG. 6 is a schematic diagram of a current collector according to an embodiment of the present application;
FIG. 7 is a schematic diagram of a current collector on which first insulation layers are coated according to an embodiment of the present application;
FIG. 8 is a schematic diagram of a current collector on which cutting lines are shown according to an embodiment of the present application;
FIG. 9 is a schematic diagram of a current collector on which an active material layer is coated according to an embodiment of the present application;
FIG. 10 is a schematic diagram of a battery cell according to an embodiment of the present application;
FIG. 11 is a schematic diagram of a battery according to an embodiment of the present application; and
FIG. 12 is a schematic diagram of a power consuming apparatus according to an embodiment of the present application.

### Reference numerals:

1: electrode plate; 124: cutting line; 10: current collector; 11: active material layer; 121: first insulation layer; 1211: first subpart; 1212: second subpart; 122: second insulation layer; 101: main body part; 102: tab; 1021: first part; 1022: second part; 1011: coating region; 1012: transition region; 1011a: first end surface; and 1222a: second end surface.

### DETAILED DESCRIPTION

Implementations of an electrode plate, a preparation method therefor, a battery cell, a battery, and a power consuming apparatus of the present application are specifically disclosed in detailed descriptions with reference to the accompanying drawings as appropriate. However, there may be situations where unnecessary detailed explanations are omitted. For example, there are situations where detailed explanations of well-known matters and repeated explanations of actually the same structure are omitted. Thus, the following descriptions do not become unnecessarily lengthy, which facilitates understanding by those skilled in the art. In addition, the drawings and subsequent descriptions are provided for those skilled in the art to fully understand the present application, and are not intended to limit the subject matter recited in the claims.

A "range" disclosed in the present application is defined in a form of a lower limit and an upper limit. A given range is defined by selecting a lower limit and an upper limit, and the selected lower limit and upper limit define a boundary of the specific range. The range defined in this way may include or exclude end values, and may be arbitrarily combined, that is, any lower limit can be combined with any upper limit to form a range. For example, if ranges of 60 to 120 and 80 to 110 are listed for a particular parameter, it is to be understood that ranges of 60 to 110 and 80 to 120 are also expected. Additionally, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In the present application, unless stated otherwise, the numerical range "a to b" represents an abbreviated representation of any combination of real numbers between a to b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be performed in the order described or in a random order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

Design factors in many aspects need to be simultaneously considered for development of the battery technologies, such as an energy density, a cycle life, a discharge capacity, a charging and discharging rate, and reliability. As important performance, the energy density is of great importance to a battery cell. A high-capacity battery cell usually has a high energy density, and the high-capacity battery cell needs many electrode plates. In a process of preparing a battery cell, a plurality of layers of electrode plates (including a positive electrode plate and a negative electrode plate) and a separator need to be wound or laminated to form an electrode assembly, and tabs of the electrode plates are welded and bent to reduce space occupied by the tabs, thereby improving an energy density of the battery cell. Each of the electrode plates includes a current collector and an active material layer and insulation layers that are coated in different regions of the current collector. After the corresponding active material layer and insulation layers are coated on the current collector, the current collector on which the active material layer and insulation layers are coated needs to be cut to obtain a tab. After the cutting is completed, insulation layers are disposed in a part of regions of the tab. However, a thickness of the insulation layers on the tab is large. When there are a large quantity of layers of tabs, the excessively large thickness of the insulation layers on the tab may cause difficulty in bending the tab. Consequently, a part of the tab may be inserted into the electrode assembly (for example, a non-tab part of an electrode plate in the electrode assembly) after being bent. Consequently, a phenomenon such as a short circuit occurs, which is adverse to improving reliability of the battery cell.

In view of this, the present application provides an electrode plate. The electrode plate includes a current collector and first insulation layers. The first insulation layers are disposed on a surface of a part of a tab on the current collector. A ratio L of a thickness of the first insulation layers to a thickness of the current collector (the part that is of the tab and on which the first insulation layers are disposed) satisfies: L≤1.3. In this way, the thickness of the first insulation layers is small, and difficulty in bending the tab is reduced, so that a risk of a short circuit caused when the tab is inserted into an electrode assembly can be reduced, to help improve reliability of a battery cell.

### [Electrode plate]

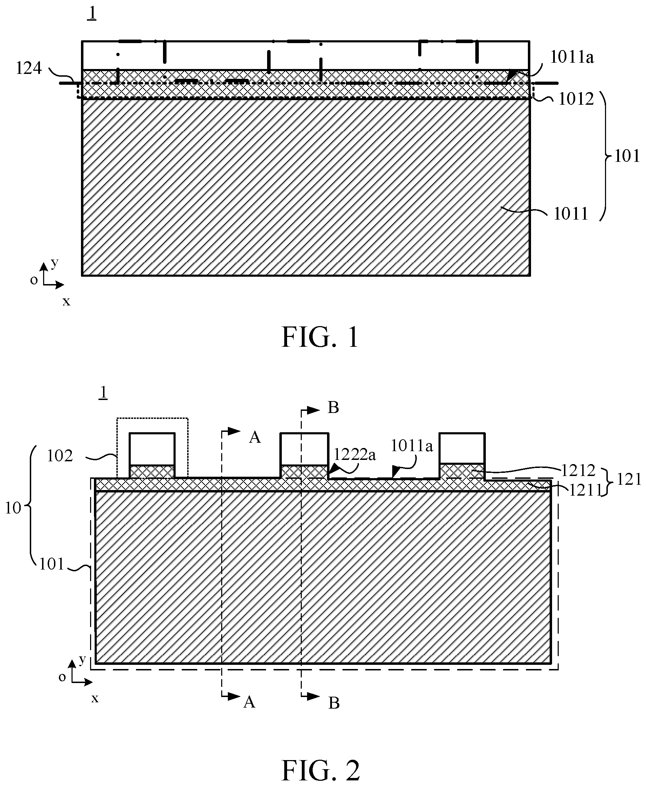

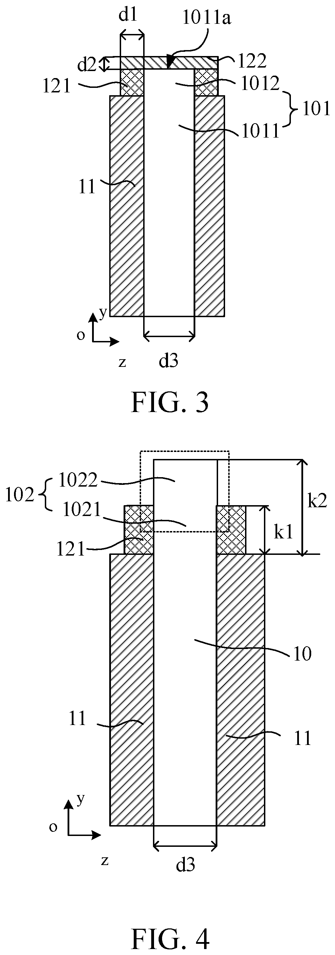

FIG. 1 is a schematic diagram of an electrode plate before a tab is processed according to an embodiment of the present application. FIG. 2 is a schematic diagram of an electrode plate according to an embodiment of the present application. FIG. 3 is a diagram of a cross-section view along a direction A-A in FIG. 2. FIG. 4 is a diagram of a cross-section view along a direction B-B in FIG. 2.

With reference to FIG. 1 and FIG. 2, FIG. 1 is a schematic diagram of an electrode plate before a tab is processed, and FIG. 2 is a schematic diagram of an electrode plate after a tab is processed. As shown in FIG. 1, black dashed lines are cutting lines 124 for obtaining a tab through cutting. After cutting is performed along the cutting lines 124, an electrode plate 1 shown in FIG. 2 is obtained.

With reference to FIG. 1 to FIG. 4, the electrode plate 1 includes a current collector 10 and first insulation layers 121.

The current collector 10 includes a main body part 101 and a tab 102. The tab 102 extends from a first end of the main body part 101, and the first end is one end of the main body part 101 along a first direction.

The first direction is parallel to a plane on which the current collector 10 is located, and the first direction is a direction in which the tab 102 protrudes relative to the main body part 101. For example, the first direction is a direction y in FIG. 2.

The tab 102 includes a first part 1021 and a second part 1022. The first part 1021 is closer to the main body part 101 than the second part 1022. The first insulation layers 121 are disposed on surfaces of two sides of the first part 1021.

The first part 1021 is connected to the second part 1022, and the first insulation layers 121 are not disposed in the second part 1022, in other words, the second part 1022 is bare.

Surfaces of two sides of the current collector 10 are two surfaces opposite to each other along a thickness direction of the current collector 10. The first insulation layers 121 are disposed on the surfaces of the two sides of the first part 1021, in other words, the first insulation layers 121 are disposed on both surfaces that are of the first part 1021 of the tab 102 and that are opposite to each other along the thickness direction.

A ratio L of a thickness d1 of the first insulation layers 121 to a thickness d3 of the first part 1021 satisfies: L≤1.3.

L may be 1.3, 1.29, 1, 0.8, 0.6, 0.3, 0.1, or any value within the foregoing range.

The thickness d3 of the first part 1021 may also be referred to as a thickness of the current collector 10.

The thickness d1 of the first insulation layers 121 is a thickness of the first insulation layer 121 on a surface of one side of the first part 1021. A total thickness of the first insulation layers is a sum of thicknesses of the first insulation layers 121 on the surfaces of the two sides. For example, the first insulation layers 121 on the surfaces of the two sides of the first part 1021 may have a same thickness or different thicknesses.

The thickness d1 of the first insulation layers 121 may be an average thickness of the first insulation layer 121 on a surface of one side of the first part 1021. For example, the average thickness is an average value of a largest size and a smallest size in a thickness direction of the first insulation layers 121. Similarly, the thickness d3 of the first part 1021 refers to an average thickness of the first part 1021.

When L does not exceed 1.3, the first insulation layers 121 have a small thickness, and a total thickness of the first insulation layers 121 and the first part 1021 is also small. In this way, when there are a large quantity of layers of tabs 102, difficulty in bending the tab 102 can be reduced. Therefore, a risk that the tab 102 is inserted into an electrode assembly after being bent can be reduced, to further reduce a risk of a short circuit caused when the tab is inserted into the electrode assembly.

This embodiment of the present application provides the electrode plate 1, and the electrode plate 1 includes the current collector 10 and the first insulation layer 121. The current collector 10 includes the main body part 101 and the tab 102. The tab 102 extends from the first end of the main body part 101, and the first end is the end of the main body part 101 along the first direction. The tab 102 includes the first part 1021 and the second part 1022. The first part 1021 is closer to the main body part 101 than the second part 1022. The first insulation layers 121 are disposed on the surfaces of the two sides of the first part 1021. In this way, a risk generated when the first part 1021 overlaps an electrode having a polarity opposite to that of the first part 1021 can be reduced. The ratio L of the thickness d1 of the first insulation layers 121 to the thickness d3 of the first part 1021 satisfies: L≤1.3. In this way, the first insulation layers 121 have a small thickness, and the total thickness of the first insulation layers 121 and the first part 1021 is small, to facilitate bending of the first part 1021 of the tab 102. In a battery cell including the electrode plate 1, risks such as a short circuit and self discharging caused when the tab 102 is inserted into an electrode assembly in the battery cell after being bent can be reduced, to help improve reliability of the battery cell.

In some embodiments, the ratio L of the thickness d1 of the first insulation layers 121 to the thickness d3 of the first part 1021 satisfies: L≤1. In this way, the first insulation layers 121 have a smaller thickness, to help further reduce the risks such as the short circuit caused when a part of the tab 102 is inserted into the electrode assembly in the battery cell after the tab is bent.

In some embodiments, L satisfies: 1/30≤L≤1. In this way, the first insulation layers 121 have an appropriate thickness, to facilitate preparation of the first insulation layers 121. In addition, when the first insulation layers 121 include a thermoplastic polymer, L is greater than or equal to 1/30. The first insulation layers 121 include a large quantity of thermoplastic polymers, so that an appropriate quantity of thermoplastic polymers are melted and flow to an end surface, to form uniform and dense second insulation layers on the end surface.

In some embodiments, L satisfies: 4/13≤L≤6/13. In this way, the preparation of the first insulation layers 121 can be facilitated, and the risk that the tab 102 is inserted into the electrode assembly after being bent is further reduced.

In some embodiments, the thickness d1 of the first insulation layers 121 satisfies: d1≤10 µm. For example, d1 is 0.5 µm, 1 µm, 3 µm, 5 µm, 6 µm, 8 µm, 10 µm, or any value within the foregoing range.

When the thickness d1 of the first insulation layers 121 is not greater than 10 µm, the total thickness of the first insulation layers 121 is small. In this way, when there are a large quantity of layers of tabs 102, difficulty in bending the tab 102 can be reduced. Therefore, a risk that the tab 102 is inserted into an electrode assembly after being bent can be reduced, to further reduce a risk of a short circuit caused when the tab is inserted into the electrode assembly.

In some embodiments, the thickness d1 of the first insulation layers 121 satisfies: 0.5 µm≤d1≤10 µm.

When the total thickness d1 of the first insulation layers 121 is not less than 0.5 µm, the first insulation layers 121 have a certain thickness, so that difficulty in preparing the first insulation layers 121 can be reduced, to help prepare uniform first insulation layers 121, and reduce a risk that a part of the surface of the first part 1021 of the tab 102 is bare.

In some embodiments, the thickness d1 of the first insulation layers 121 satisfies: 4 µm≤d1≤6 µm. For example, d1 is 4 µm, 5 µm, 6 µm, or any value within the foregoing range.

When the thickness d1 of the first insulation layers 121 is not less than 4 µm, the difficulty in preparing the first insulation layers 121 is reduced. When the thickness d1 of the first insulation layers 121 does not exceed 6 µm, the first insulation layers 121 have a small thickness, so that the difficulty in bending the tab 102 can be further reduced.

In some embodiments, the first insulation layers 121 on the surfaces of the two sides of the first part 1021 have a same thickness. The two insulation layers 121 on the surfaces of the two sides have the same thickness. In this way, force applied to the two sides of the first part 1021 is uniform, and the preparation of the first insulation layers 121 is further facilitated.

In some embodiments, the main body part 101 includes a coating region 1011 and a transition region 1012. The transition region 1012 is disposed between the coating region 1011 and the tab 102, and the first insulation layers 121 are disposed on surfaces of two sides of the transition region 1012.

The first insulation layers 121 may include a first subpart 1211 and a second subpart 1212. The first subpart 1211 is located on the surface of the transition region 1012 of the main body part 101, and the second subpart 1212 is located on the surface of the first part 1021 of the tab 102.

Optionally, in some embodiments, the first insulation layers 121 are disposed on a surface of one side of the transition region 1012.

In the foregoing embodiment, the first insulation layers 121 are disposed on the surfaces of the transition region 1012, to help reduce risks such as a short circuit generated when the transition region 1012 overlaps an electrode having a polarity opposite to that of the transition region 1012.

In some embodiments, the electrode plate 1 further includes an active material layer 11, and the active material layer 11 is disposed on a surface of at least one side of the coating region 1011. In this way, the active material layer 11 is not cut in a cutting process, so that a risk that the active material layer 11 falls off can be reduced. In addition, the active material layer 11 is disposed, so that the battery cell can perform a charging and discharging operation, to help normal running of the battery cell.

In some embodiments, the active material layer 11 is disposed on surfaces of two sides of the coating region 1011.

Optionally, in some embodiments, the active material layer 11 is disposed on a surface of at least one side of the coating region 1011.

In some embodiments, the first insulation layers 121 include a thermoplastic polymer.

The thermoplastic polymer may be a polymer that is softened after being heated, solidified when being cooled, and can be softened again. For example, when being heated to a certain temperature, the thermoplastic polymer changes from solid-state particles to a flowing state, and when being cooled, the thermoplastic polymer may change to a layered or film-layered thermoplastic polymer.

When being heated to a certain condition, the thermoplastic polymer in the first insulation layers 121 changes from a solid state to a flowing state. In this way, in a process of cutting the current collector 10 on which the first insulation layers 121 are disposed, the thermoplastic polymer in the flowing state may flow to a burr generated due to the cutting and an end surface of the current collector 10 that is bare after the cutting. After a temperature is reduced, the thermoplastic polymer in the flowing state is solidified at the burr and the bare end surface, to coat the burr and the bare end surface. Therefore, a risk that the burr and the bare end surface overlap electrodes having polarities opposite to those of the burr and the bare end surface can be reduced, to help further improve the reliability of the battery cell.

In some embodiments, a maximum particle size D¹max of the thermoplastic polymer satisfies: D¹max≤10 µm; and optionally, D¹max satisfies: D¹max≤6 µm.

D¹max may be 3 µm, 5 µm, 7 µm, 8 µm, 9 µm, 10 µm, or any value within the foregoing range.

In this way, a risk that a scratch occurs due to a large maximum particle size of the thermoplastic polymer in a process of preparing the first insulation layers 121 can be reduced, and it is beneficial to obtain the first insulation layers 121 with an appropriate thickness, thereby facilitating preparation of the first insulation layers 121.

In some embodiments, due to factors such as a preparation craft of the thermoplastic polymer, there is a correspondence between the maximum particle size D¹max of the thermoplastic polymer and a volume particle size distribution Dv50 of the thermoplastic polymer. For example, the maximum particle size and the volume particle size distribution satisfy normal distribution or slightly deviate from normal distribution.

In some embodiments, the first insulation layers 121 further include a binder. In this way, in the process of preparing the first insulation layers 121, it is convenient to bind the thermoplastic polymer in insulation slurry of the first insulation layers 121 to the surface of the current collector 10, thereby reducing a risk that the thermoplastic polymer falls off from the current collector 10.

Optionally, a mass content A of the thermoplastic polymer satisfies: 40 wt%≤A≤80 wt%, and a mass content B of the binder satisfies: 20 wt%≤B≤40 wt% based on a total mass of the first insulation layers 121.

A may be 40 wt%, 50 wt%, 60 wt%, 70 wt%, 80 wt%, or any value within the foregoing range. B may be 20 wt%, 30 wt%, 35 wt%, 40 wt%, or any value within the foregoing range.

For example, the first insulation layers 121 include only the thermoplastic polymer and the binder, the mass content A of the thermoplastic polymer is 60 wt%, and the mass content B of the binder is 40 wt%. For another example, the mass content A of the thermoplastic polymer is 80 wt%, and the mass content B of the binder is 20 wt%.

Optionally, the first insulation layers 121 may further include a material other than the thermoplastic polymer and the binder. In an example, in this case, A may be 40 wt%, and B may be 20 wt%.

In the foregoing embodiment, the binder has an appropriate mass content, and the first insulation layers 121 do not fall off from the current collector 10. The thermoplastic polymer has an appropriate mass content, to facilitate forming of the uniform and dense second insulation layers 122 on the bare end surface after the cutting.

In some embodiments, the first insulation layers 121 further include inorganic particles. The inorganic particles are disposed, so that a surface tension of the insulation slurry can be reduced when the thickness of the first insulation layers 121 is small, thereby reducing a risk that the current collector 10 is bare.

The inorganic particles may be insulated inorganic particles, or may be inorganic particles that are non-conductive at an operating voltage of a battery (for example, non-conductive at a voltage of 5V). For example, the inorganic particles may have a certain dielectric constant.

The inorganic particles have certain ion transport performance, but are insulated at least at the operating voltage of the battery.

Optionally, the inorganic particles include insulated inorganic particles.

Optionally, the insulated inorganic particles include at least one of boehmite (γ-AlOOH) and aluminum oxide. The boehmite or the aluminum oxide has good heat resistance and insulativity. The boehmite or the aluminum oxide is selected as the insulated inorganic particles and added to the first insulation layers 121, so that the first insulation layers 121 have good heat resistance and insulativity. In addition, the boehmite or the aluminum oxide are easily obtained, so that costs are low.

For another example, the insulated inorganic particles may alternatively be silicon dioxide. This embodiment of the present application includes, but is not limited thereto.

In some embodiments, the inorganic particles may alternatively be inorganic particles having a dielectric constant greater than or equal to 3, and may include at least one of the boehmite (γ-AlOOH), the aluminum oxide (Al₂O₃), barium sulfate (BaSO₄), magnesium oxide (MgO), magnesium hydroxide (Mg(OH)₂), a silicon oxide compound SiOx (where 0<x≤2), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃ (PZT for short), Pb1-mLamZr1-nTinO₃ (PLZT for short, where 0<m<1, and 0<n<1), and Pb(Mg₃Nb_{2/3})O₃-PbTiO₃ (PMN-PT for short).

In some embodiments, the inorganic particles have a capability of transmitting active ions, and may include at least one of lithium orthophosphate (Li₃PO₄), lithium titanium phosphate (LixTiy(PO₄)₃, where 0<x<2, and 0<y<3), lithium aluminum titanium phosphate (LixAlyTiz(PO₄)₃, where 0<x<2, 0<y<1, and 0<z<3), (LiAlTiP)xOy-type glass (where 0<x<4, and 0<y<13), lithium lanthanum titanate (LixLayTiO₃, where 0<x<2, and 0<y<3), lithium germanium phosphorus sulfide (LixGeyPzSw, where 0<x<4, 0<y<1, 0<z<1, and 0<w<5), lithium nitride (LixNy, where 0<x<4, and 0<y<2), SiS₂-type glass (LixSiySz, where 0<x<3, 0<y<2, and 0<z<4), and P₂S₅-type glass (LixPySz, where 0<x<3, 0<y<3, and 0<z<7).

In some embodiments, a maximum particle size D²max of the inorganic particles satisfies: D²max≤10 µm; and optionally, D²max satisfies: D²max≤6 µm. In this way, the inorganic particles have an appropriate particle size, so that a risk that a scratch occurs in a process of preparing the first insulation layers 121 can be reduced, and it is beneficial to obtain the first insulation layers 121 with an appropriate thickness, thereby facilitating preparation of the first insulation layers 121.

In some embodiments, a volume particle size distribution Dv50 of the inorganic particles satisfies: 0.5 µm≤Dv50≤6 µm. For example, the Dv50 is 0.5 µm, 1 µm, 2 µm, 4 µm, 5 µm, 6 µm, or any value within the foregoing range.

In this way, in the process of preparing the first insulation layers 121, slurry of the first insulation layers 121 has an appropriate viscosity, to facilitate coating of the first insulation layers 121. In addition, the slurry of the first insulation layers 121 has an appropriate solid content, to facilitate oven drying of the first insulation layers 121.

Due to an impact of a factor such as a preparation craft, there is a correspondence between the volume particle size distribution Dv50 of the inorganic particles and the maximum particle size D²max of the inorganic particles. For example, when the volume particle size distribution Dv50 of the inorganic particles is 0.5 µm, D²max is approximately 1 µm. When the volume particle size distribution Dv50 of the inorganic particles is 2 µm, D²max is approximately 5 µm. When the volume particle size distribution Dv50 of the inorganic particles is 6 µm, D²max is approximately 10 µm.

In some embodiments, the volume particle size distribution Dv50 of the inorganic particles satisfies: 0.5 µm≤Dv50≤2 µm. In this way, the particle size of the inorganic particles is small, so that it is convenient to separate some impurities in the slurry of the first insulation layers 121 from the inorganic particles, thereby facilitating filtering out the impurities.

In some embodiments, a mass content C of the insulated inorganic particles satisfies: 0<C≤40 wt% based on the total mass of the first insulation layers 121. For example, C is 10 wt%, 30 wt%, 35 wt%, 40 wt%, or any value within the foregoing range. The mass content of the insulated inorganic particles is properly set, so that a surface tension of the insulation slurry is reduced when the thickness of the first insulation layers 121 is small, thereby reducing a risk that the current collector 10 is bare.

For example, in the first insulation layers 121, the mass content A of the thermoplastic polymer is 40 wt%, the mass content B of the binder is 40 wt%, and the mass content C of the inorganic particles is 20 wt%. For another example, A is 40 wt%, B is 20 wt%, and C is 40 wt%. This embodiment of the present application includes, but is not limited thereto, provided that values of A, B, and C satisfy the foregoing ranges.

Optionally, C satisfies: 30 wt%≤B≤40 wt%.

In some embodiments, a melting point T of the thermoplastic polymer ranges from 100 °C to 200 °C. For example, the melting point of the thermoplastic polymer is 100 °C, 110 °C, 130 °C, 150 °C, 200 °C, or any value within the foregoing range.

The melting point of the thermoplastic polymer is a temperature at which the thermoplastic polymer transforms from a solid or semi-solid state to a liquid state.

The melting point of the thermoplastic polymer is not less than 100 °C. In this way, a risk that the electrode plate 1 is heated, and consequently, the thermoplastic polymer is melted or flows in another processing process can be reduced. The melting point of the thermoplastic polymer does not exceed 200 °C. In this way, a risk that the thermoplastic polymer cannot transform into a flowing state during the cutting can be reduced, thereby reducing a risk that the second insulation layers 122 cannot be formed at the bare end surface of the current collector 10 after the cutting or the second insulation layer 122 is not sufficiently uniform and dense. In addition, the melting point of the thermoplastic polymer does not exceed 200 °C, and the thermoplastic polymer can change to the flowing state under a small amount of heat, to help reduce energy consumed during the cutting.

In the foregoing embodiment, the thermoplastic polymer has an appropriate melting point. In a process of cutting the current collector 10 on which the first insulation layers 121 are disposed, under an effect of heat generated due to the cutting, the thermoplastic polymer changes from a solid state to a flowing state. The thermoplastic polymer in the flowing state can flow to an end surface of the current collector 10 that is bare after the cutting and a burr generated due to the cutting, to help prepare the second insulation layers 122.

In some embodiments, the melting point T of the thermoplastic polymer ranges from 100 °C to 130 °C. In this way, the second insulation layers are prepared under an effect of low heat.

Optionally, the thermoplastic polymer includes at least one of polystyrene, polyolefin, polyimide, polyester, polyphenylene sulfide, aromatic polyamide, polyamide, a copolymer of butyl acrylate and ethyl methacrylate, and respective modified polymers.

The polyolefin may be a collective name of thermoplastic resin obtained by separately or jointly polymerizing α-olefin such as ethylene, propylene, 1-butene, 1-pentene, 1-hexene, 1-octene, or 4-Methyl-1-pentene, and some cycloalkene. For example, the polyolefin includes polyethylene wax.

For example, the thermoplastic polymer includes at least one of a modified polymer of polystyrene, a modified polymer of polyolefin, a modified polymer of polyimide, a modified polymer of polyester, a modified polymer of polyphenylene sulfide, a modified polymer of aromatic polyamide, a modified polymer of polyamide, and a modified polymer of a copolymer of butyl acrylate and ethyl methacrylate.

The melting point of the thermoplastic polymer is related to a molecular mass of the thermoplastic polymer. Generally, a larger molecular mass indicates a higher melting point. For thermoplastic polymers of a same type, thermoplastic polymers with different molecular masses have different melting points.

The thermoplastic polymer is used, to help form a uniform and dense coating on the burr and the end surface of the current collector 10 that is bare after the cutting.

In some embodiments, the binder includes at least one of a polyacrylic acid-polyacrylonitrile copolymer, a polyacrylate-polyacrylonitrile copolymer, polyether acrylate, polyacrylic acid, polyacrylonitrile, gelatin, chitosan, and sodium alginate.

The binder has good binding performance, to help bind the thermoplastic polymer to a surface of the current collector 10.

Optionally, the binder is the polyacrylonitrile, and the binder has a good leveling property, to help uniformly coat the first insulation layers on the surface of the current collector 10.

In some embodiments, a binding force F between the first insulation layers 121 and the current collector 10 satisfies: ranging from 20 N/m to 100 N/m; and optionally, F satisfies: 60 N/m≤F≤90 N/m.

F may be 20 N/m, 60 N/m, 80 N/m, 100 N/m, or any value within the foregoing range.

When the binding force between the first insulation layers 121 and the current collector 10 ranges from 20 N/m to 100 N/m, binding between the first insulation layers 121 and the current collector 10 is strong, so that a risk that the first insulation layers 121 fall off from the current collector 10 can be reduced.

In some embodiments, a ratio of a size k1 of the first part 1021 to a sum k2 of a size of the first insulation layers 121 and a size of the second part 1012 along the first direction satisfies: 0.3≤k1:k2≤0.5. For example, k1:k2 is 0.3, 0.4, 0.5, or any value within the foregoing range.

k2 is the sum of the size of the first insulation layers 121 and the size of the second part 1012 along the first direction.

When k1:k2 is not less than 0.3, it is beneficial to reduce a risk of a short circuit generated when the first part 1021 overlaps an electrode having a polarity opposite to that of the first part 1021. When k1:k2 does not exceed 0.5, it is beneficial to connection between the second part 1022 of the tab 102 and an end cover component of the battery cell.

In some embodiments, the electrode plate 1 further includes second insulation layers 122. The second insulation layers 122 are disposed on a first end surface 1011a, and the first end surface 1011a is an end surface of the main body part 101 at the first end.

The first end surface 1011a is a surface parallel to the thickness direction of the current collector 10. For example, as shown in FIG. 3, the end surface 1011a is a surface parallel to the direction y and a direction z.

The first end surface 1011a may be formed through the following process: As shown in FIG. 1, in a process of cutting the current collector 10, the current collector 10 is cut along the cutting lines 124, and the first end surface 1011a is a cut end surface of the transition region 1012. After the cutting, the current collector 10 is bare at the first end surface 1011a, and the burr may be generated.

In the foregoing embodiment, the second insulation layers 122 can coat the first end surface 1011a, to reduce a risk that the first end surface 1011a is bare, so that a risk of a short circuit generated when the first end surface 1011a overlaps an electrode having a polarity opposite to that of the first end surface 1011a can be reduced. In addition, the second insulation layers 122 may further coat the burr generated during the cutting, to reduce a risk that the burr overlaps an electrode having a polarity opposite to that of the burr.

In some embodiments, a thickness d2 of the second insulation layers 122 ranges from 10 nm to 400 nm. For example, d2 is 10 nm, 30 nm, 100 nm, 120 nm, 160 nm, 200 nm, 300 nm, 350 nm, 400 nm, or any value within the foregoing range.

Optionally, the thickness d2 of the second insulation layers 122 is related to the thickness d1 of the first insulation layers 121. For example, when the first insulation layers 121 include the thermoplastic polymer, a larger thickness d1 of the first insulation layers 121 indicates more thermoplastic polymers in the first insulation layers 121. When the thickness d2 of the second insulation layers 122 is larger, forming of the uniform and dense second insulation layers 122 is better facilitated.

The thickness d2 of the second insulation layers 122 is an average thickness of the second insulation layers 122. For example, the thickness d2 is an average value of a largest size and a smallest size in a thickness direction of the second insulation layers 122.

The thickness d2 of the second insulation layers 122 may be measured in the following manner: photographing the first end surface 1011a of the electrode plate 1 by using a scanning electron microscope (SEM), and measuring the thickness d2 of the second insulation layers 122 by using an obtained picture.

In the foregoing embodiment, when the second insulation layers 122 have a small thickness, the burr and the first end surface 1011a can be well coated.

Optionally, the thickness d2 of the second insulation layers 122 ranges from 100 nm to 200 nm. In this way, the second insulation layers 122 have a large thickness, to help further improve a coating effect on the burr and the first end surface 1011a.

In some embodiments, a resistance R of the second insulation layers 122 satisfies: R≥1 Q. For example, R is 1 Ω, 5 Ω, or 10 Ω.

When the resistance of the second insulation layers 122 is greater than 1 Ω, even if in some extreme cases, the first end surface 1011a overlaps an electrode having a polarity opposite to that of the first end surface 1011a, because the certain resistance is set for the second insulation layers 122, an internal short circuit does not occur in the battery cell, thereby reducing a risk such as a short circuit or even an explosion caused by the internal short circuit.

Optionally, the resistance R of the second insulation layers 122 satisfies: 50 Ω≤R≤500 Ω. In this way, when the second insulation layers 122 have a small thickness, a risk of a short circuit in the battery cell that is caused when the first end surface 1011a overlaps an electrode having a polarity opposite to that of the first end surface 1011a can be reduced.

In some embodiments, the second insulation layers 122 are disposed on the first end surface 1011a and a second end surface 1222a, the second end surface 1222a is an end surface of two ends of the first part 1021 along a second direction, and the second direction is different from the first direction.

When the electrode plate 1 includes a plurality of tabs 102, the second direction may be an arrangement direction of the plurality of tabs 102. For example, as shown in FIG. 2, the second direction is a direction x.

In a process of cutting the current collector 10 along the cutting lines 124 to prepare the tab 102, a cutting tool passes through a region of the second subpart 1212 of the first insulation layers 121 (which may also be referred to as a region of the first part 1021 of the tab 102). After the cutting, the second end surface 1222a is bare. The first insulation layers 121 are disposed at the second end surface 1222a, so that a risk generated when the second end surface 1222a overlaps an electrode having a polarity opposite to that of the second end surface 1222a can be reduced.

Optionally, the second direction is perpendicular to the first direction.

In the foregoing embodiment, the second insulation layers 122 can coat the second end surface 1222a that is bare due to the cutting, so that a risk generated when the second end surface 1222a overlaps an electrode having a polarity opposite to that of the second end surface 1222a can be reduced.

Optionally, a resistance of the second end surface 1222a on which the second insulation layers 122 are disposed is the same as a resistance of the first end surface 1011a on which the second insulation layers 122 are disposed.

In some embodiments, a material of the second insulation layers 122 is the same as a material of the thermoplastic polymer in the first insulation layers 121. In this way, it is beneficial to simplify steps of preparing the electrode plate 1 and accelerate a production rhythm.

For example, the current collector 10 on which the active material layer 11 is coated may be cut first, and then a hot-melt tool (such as a hot-melt gun or a hot-melt coater) is used to prepare the second insulation layers 122 at the first end surface 1011a and the second end surface 122a, and the first insulation layers 121 in the transition region 1012 and the first part 1021 of the tab 102. In this way, the first insulation layers 121 and the second insulation layers 122 may be simultaneously prepared in one step.

For another example, the active material layer 11 and the first insulation layers 121 are first prepared on the current collector 10, and the second insulation layers 122 are simultaneously prepared in a cutting process. In this way, the tab 102 may be generated through cutting in one step, and the second insulation layers 122 may be simultaneously prepared.

In some embodiments, a thermoplastic polymer in the second insulation layers 122 is in a film-layer shape. In other words, the second insulation layers 122 include a film-layered thermoplastic polymer.

In the foregoing embodiment, the second insulation layers 122 are formed after the thermoplastic polymer in the first insulation layers 121 is melt and solidified. After changing to the flowing state, the thermoplastic polymer in the first insulation layers 121 flow to the first end surface 1011a and the second end surface 1222a, and are solidified at the first end surface 1011a and the second end surface 1222a to form the second insulation layers 122. In this way, it is beneficial to simplify the steps of preparing the electrode plate 1, and the second insulation layers 122 can be formed during the cutting.

At least a part of the granular thermoplastic polymer remains in the first insulation layers 121. For example, at a position far away from the cutting lines, the thermoplastic polymer is particles protruding from the current collector. In the second insulation layers 122, the thermoplastic polymer is in the film-layer shape, and almost does not have a particle shape.

The granular thermoplastic polymer may be in a plurality of shapes, for example, a sphere, a rod, and a layer. The granular thermoplastic polymer herein means that the thermoplastic polymer does not change to the flowing state, and the thermoplastic polymer is in the solid state.

Before the first insulation layers 121 are obtained through cutting, the thermoplastic polymer in the first insulation layers 121 is granular. In a process of obtaining the first insulation layers 121 through cutting, a part of the thermoplastic polymer in the first insulation layers 121 changes from the solid state to the flowing state (for example, a part of the thermoplastic polymer close to the cutting lines 124 changes to the flowing state), and the other part of the thermoplastic polymer is still solid-state particles.

In some embodiments, a quantity of layers of the tab 102 is greater than or equal to 50. Optionally, the thickness d3 of the first part 1021 of each layer of tab 102 satisfies: 10 µm≤d3≤15 µm. In this way, a total thickness of the tab is not less than 500 µm. Although the total thickness of the tab is large, because the thickness of the first insulation layers 121 is small, after the battery cell is prepared, a probability that the tab is bent and inserted into the electrode assembly is greatly reduced.

The quantity of layers of the tab 102 may be 50, 60, 80, 100, or a larger number. As the quantity of layers of the tab 102 increases, a capacity of the battery cell also increases.

In some embodiments, the electrode plate 1 includes a positive electrode plate. Optionally, the current collector includes aluminum foil. In this way, the electrode plate 1 is the positive electrode plate, so that a risk that the positive electrode plate overlaps a negative electrode plate is reduced, to help improve the reliability of the battery cell. In addition, it is beneficial to reduce a risk generated when lithium dendrites separated out from the positive electrode plate and the negative electrode plate overlap.

In some embodiments, the positive electrode plate includes a positive electrode active material, and the positive electrode active material includes at least one of lithium transition metal oxide and lithium-containing phosphate in an olivine structure.

Optionally, the lithium-containing phosphate in the olivine structure includes lithium iron phosphate. In this way, the battery cell prepared by using the electrode plate has higher reliability.

A general formula of the lithium-containing phosphate in the olivine structure may be LiaAxMn1-yByP1-zCzO4-nDn. 0<a≤1.1, 0.001≤x≤0.1, 0.001≤y<0.5, 0.001≤z≤0.1, and 0.001≤n≤0.1. A includes one or more of Zn, Al, Na, K, Mg, Nb, Mo, and W. B includes one or more of Ti, V, Zr, Fe, Ni, Mg, Co, Ga, Sn, Sb, Nb, and Ge. C includes one or more of B, S, Si, and N. D includes one or more of S, F, Cl, and Br.

The lithium-containing phosphate in the olivine structure may further include at least one of lithium manganese phosphate and lithium manganese iron phosphate.

Optionally, the lithium transition metal oxide includes LiNi_{0.8}Co_{0.1}Mn_{0.1}O₂ (which may also be referred to as NCM811). In this way, the battery cell prepared by using the electrode plate can have a large capacity.

The lithium transition metal oxide may further include another ternary material, for example, NCM622. The transition metal oxide including lithium may further include a lithium-rich manganese-based material, and the like.

During charging and discharging of a battery, Li is deintercalated and consumed. When the battery is discharged to different states, a mol content of Li differs. The foregoing limitation on a includes mol contents of Li in different charging and discharging states of the battery (where a voltage of the battery usually ranges from 2V to 5V). In a list of positive electrode materials in the present application, the mol content of Li is in an initial state of the material, that is, a state before the material is delivered. The positive electrode material is applied to a battery system, and the mol content of Li changes after a charging and discharging cycle. In the list of the positive electrode materials in the present application, a mol content of O is merely a theoretical state value. Oxygen released by a lattice causes a change in the mol content of O, and the actual mol content of O floats.

In some embodiments, the current collector 10 includes metal foil or a composite current collector. In this way, it is convenient to set a material of the current collector 10 based on an actual requirement.

Optionally, the metal foil includes aluminum foil or copper foil.

Optionally, the composite current collector includes a polymer material base layer or a metal layer located on at least one surface of the polymer material base layer.

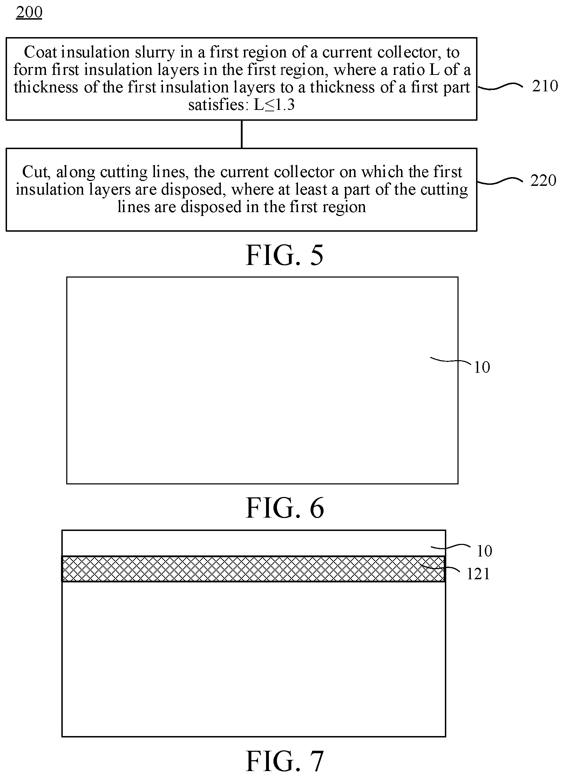

The foregoing describes a technical solution of the electrode plate with reference to FIG. 1 to FIG. 4, and the following describes a preparation method for an electrode plate with reference to FIG. 5. For a part corresponding to the electrode plate, refer to the foregoing descriptions, and details are not described herein again.

### [Preparation method for an electrode plate]

FIG. 5 is a schematic diagram of a preparation method for an electrode plate according to an embodiment of the present application. The method 200 may be used for preparing the electrode plate 1 in the foregoing embodiment. The method 200 includes the following steps.

FIG. 6 is a schematic diagram of a current collector according to an embodiment of the present application. For example, as shown in FIG. 6, a shape of the current collector 10 is a plate or a rectangle. The shape and a size of the current collector 10 may be set based on an actual requirement, and this embodiment of the present application includes, but is not limited thereto.

Step 210: Coat insulation slurry in a first region of the current collector 10, to form first insulation layers 121 in the first region, where a ratio L of a thickness d1 of the first insulation layers 121 to a thickness d3 of a first part 1021 satisfies: L≤1.3.

Specifically, the insulation slurry is coated on surfaces of two sides of the first region of the current collector 10.

FIG. 7 is a schematic diagram of a current collector on which first insulation layers are coated according to an embodiment of the present application. As shown in FIG. 7, the insulation slurry is coated in the first region of the current collector 10, to obtain the current collector 10 on which the first insulation layers 121 are disposed.

A size of the first region may be set based on an actual requirement. In this embodiment of the present application, the first region corresponds to a transition region 1012 of a main body part 101 and the first part 1021 of a tab 102 of the electrode plate 1.

Step 220: Cut, along cutting lines 124, the current collector 10 on which the first insulation layers 121 are disposed, where at least a part of the cutting lines 124 are disposed in the first region.

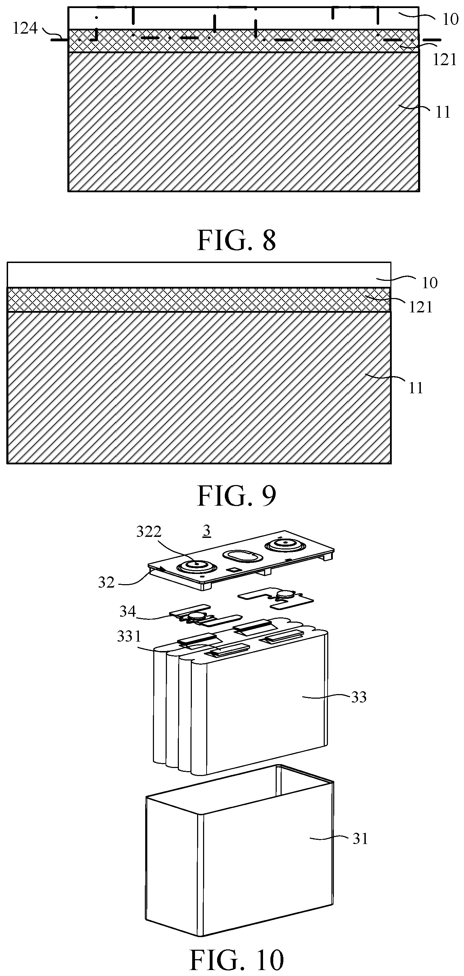

FIG. 8 is a schematic diagram of a current collector on which cutting lines are shown according to an embodiment of the present application. As shown in FIG. 8, the current collector 10 is cut along the cutting lines 124, to obtain the electrode plate 1 shown in FIG. 2 to FIG. 4.

In the foregoing technical solution, the thickness of the first insulation layers 121 is small, so that a part that is of a tab 102 generated after the current collector 10 is cut and on which the first insulation layers 121 are disposed has a small thickness, to reduce difficulty in bending the tab 102. Therefore, risks of a short circuit and self discharging caused when the tab 102 is inserted into an electrode assembly in a battery cell after being bent can be reduced, to help improve reliability of the battery cell.

In some embodiments, L satisfies: L≤1; optionally, L satisfies: 1/30≤L≤1; and optionally, L satisfies: 4/13≤L≤6/13.

In some embodiments, the thickness d1 of the first insulation layers satisfies: d1≤10 µm; optionally, d1 satisfies: 0.5 µm≤d1≤10 µm; and optionally, d1 satisfies: 4 µm≤d1≤6 µm. In this way, difficulty in preparing the first insulation layers 121 is reduced, and the difficulty in bending the tab 102 is further reduced.

In some embodiments, the insulation slurry includes a thermoplastic-polymer emulsion and a binder.

The thermoplastic-polymer emulsion may be a solution obtained after a thermoplastic polymer is mixed with water.

The thermoplastic-polymer emulsion and the binder are liquid, and the liquid thermoplastic-polymer emulsion and the binder can be mixed uniformly within short duration, to help reduce duration of preparing the insulation slurry.

Optionally, the insulation slurry includes only the thermoplastic-polymer emulsion and the binder. In this way, the insulation slurry has a simple formula, to reduce production complexity.

Optionally, a mass content A of a thermoplastic polymer in the thermoplastic-polymer emulsion in the insulation slurry satisfies: 40 wt%≤A≤80 wt%, and a mass content B of the binder in the insulation slurry satisfies: 20 wt%≤B≤40 wt% based on a total mass of the insulation slurry. For example, A is 40 wt%, 60 wt%, 80 wt%, or any value within the foregoing range. B is 20 wt%, 35 wt%, 40 wt%, or any value within the foregoing range.

The mass content of the thermoplastic polymer is properly set, to help form uniform and dense second insulation layers 122 at the end surface of the current collector that is generated through cutting. The mass content of the binder is properly set, to help reduce a risk that the first insulation layers 121 fall off from the current collector 10.

In some embodiments, a maximum particle size D¹max of the thermoplastic polymer satisfies: D¹max≤10 µm; and optionally, D¹max satisfies: D¹max≤6 µm.

In some embodiments, the insulation slurry further includes inorganic particles.

The inorganic particles are added to the insulation slurry, so that a surface tension of the insulation slurry can be reduced when the insulation slurry is coated. Therefore, when a coating thickness of the insulation slurry is small, a risk that the current collector 10 is bare when the insulation slurry cracks is reduced.

Optionally, a mass content C of the inorganic particles in the insulation slurry satisfies: 0<C≤40 wt% based on the total mass of the insulation slurry. C may be 20 wt%, 30 wt%, 40 wt%, or any value within the foregoing range.

The mass content of the insulated inorganic particles is properly set, to help reduce a risk that a surface of the current collector 10 is bare.

In some embodiments, a maximum particle size D²max of the inorganic particles satisfies: D²max≤10 µm; and optionally, D²max satisfies: D²max≤6 µm. In this way, the inorganic particles have an appropriate particle size, so that a risk that a scratch occurs in a process of preparing the first insulation layers 121 can be reduced, and it is beneficial to enable the first insulation layers 121 to have an appropriate thickness, thereby facilitating preparation of the first insulation layers 121.

For example, the maximum particle size of the inorganic particles is greater than 10 µm. When the thickness of the to-be-prepared first insulation layers 121 is less than 10 µm, some of the inorganic particles protrude from the first insulation layers 121. This is adverse to controlling the thickness of the first insulation layers 121.

Optionally, a volume particle size distribution Dv50 of the inorganic particles satisfies: 0.5 µm≤Dv50≤6 µm; and optionally, the volume particle size distribution Dv50 of the inorganic particles satisfies: 0.5 µm≤Dv50≤2 µm. In this way, in the process of preparing the first insulation layers 121, the insulation slurry has an appropriate viscosity, to facilitate coating of the insulation slurry. In addition, the insulation slurry has an appropriate solid content, to facilitate oven drying of the first insulation layers 121.

In some embodiments, the volume particle size distribution Dv50 of the inorganic particles is 1 µm. In this way, the insulation slurry has an appropriate fineness, to facilitate obtaining of the first insulation layers having an appropriate thickness.

In some embodiments, the fineness of the insulation slurry is approximately 10 µm. In this way, it is convenient to obtain the uniform first insulation layers 121 having an appropriate thickness.

In some embodiments, a solid content E of the thermoplastic-polymer emulsion satisfies: 30 wt%≤E≤50 wt%.

The solid content may refer to a mass percentage of a remaining part of the emulsion to a total amount after the emulsion is oven dried under a specified condition. For example, the solid content may be measured by using a solid-content measurement instrument after the emulsion is oven dried to a constant weight under a condition of 100 °C. In a process of preparing the thermoplastic-polymer emulsion, the solid content of the thermoplastic-polymer emulsion may be obtained through calculation based on a mass of the thermoplastic polymer and a mass of an added solution.

The solid content E of the thermoplastic-polymer emulsion is set to satisfy the foregoing condition, to facilitate preparation of the thermoplastic-polymer emulsion.

In some embodiments, a melting point of the thermoplastic polymer in the thermoplastic-polymer emulsion ranges from 100 °C to 200 °C. Optionally, the thermoplastic polymer includes at least one of polystyrene, polyolefin, polyimide, polyester, polyphenylene sulfide, aromatic polyamide, polyamide, a copolymer of butyl acrylate and ethyl methacrylate, and respective modified polymers.

In the foregoing technical solution, the thermoplastic polymer has an appropriate melting point. In a process of cutting the current collector 10 on which the first insulation layers 121 are disposed, under an effect of heat generated due to the cutting, the thermoplastic polymer changes from a solid state to a flowing state. The thermoplastic polymer in the flowing state can flow to an end surface of the current collector 10 that is bare after the cutting and a burr generated due to the cutting, to help prepare the second insulation layers 122. The thermoplastic polymer is used, to help form a uniform and dense coating on the burr and the end surface of the current collector 10 that is bare after the cutting.

In some embodiments, the binder includes at least one of a polyacrylic acid-polyacrylonitrile copolymer, a polyacrylate-polyacrylonitrile copolymer, polyether acrylate, polyacrylic acid, polyacrylonitrile, gelatin, chitosan, and sodium alginate. The binder has good binding performance, to help bind the thermoplastic polymer to a surface of the current collector 10.

Optionally, the binder is the polyacrylonitrile, and the binder has a good leveling property, to help uniformly coat the first insulation layers on the surface of the current collector 10.

In some embodiments, step 210 includes: coat the insulation slurry in the first region of the current collector 10 in a manner of intaglio coating, to form the first insulation layers 121 in the first region. It is convenient to prepare, in the manner of intaglio coating, the first insulation layers 121 having a small thickness.

In an example, intaglio coating may be performed by using an intaglio coater. For example, the intaglio coater includes an intaglio roll, a pressing roll, and a scraper. Coating of the first insulation layers 121 is implemented through coordination of the intaglio roll, the pressing roll, and the scraper.

In some embodiments, the method 200 further includes: after step 210, coat an active material in a second region of the current collector 10, to form an active material layer 11 in the second region.

Specifically, the active material is coated on surfaces of two sides of the second region.

FIG. 9 is a schematic diagram of a current collector on which an active material layer is coated according to an embodiment of the present application. As shown in FIG. 9, the active material is coated in the second region of the current collector 10, to obtain the current collector 10 on which the active material layer 11 is disposed.

The second region of the current collector 10 may be a region set based on an actual requirement. In this embodiment of the present application, the second region corresponds to a coating region 1011 of the main body part 101 of the electrode plate 1.

A thickness of the active material layer 11 may be tens of micrometers, and is greater than the thickness of the first insulation layers 121.

In the foregoing embodiment, because the thickness of the active material layer 11 is greater than the thickness of the first insulation layers 121, and the active material layer 11 is prepared after step 220, an impact of the active material layer 11 having a large thickness on preparation of the first insulation layers 121 can be reduced, so that it is convenient to prepare, in the manner of intaglio coating, the first insulation layers 121 having a small thickness.

In some embodiments, step 230 includes: control a laser processing tool to cut, along the cutting lines 124, the current collector on which the first insulation layers 121 are disposed.

In the foregoing embodiment, the current collector 10 is cut by using laser, and much heat can be generated during the cutting, to help the thermoplastic polymer in the first insulation layers 121 change to the flowing state and flow to the bare end surface of the current collector 10, thereby facilitating forming of the second insulation layers 122.

A use parameter of the laser processing tool may be set based on an actual requirement. For example, different powers, frequencies, and feed speeds may be set based on a type of the thermoplastic polymer.

### [Positive electrode plate]

The electrode plate 1 in the embodiments of the present application may be a positive electrode plate. The positive electrode plate includes a positive electrode current collector and a positive electrode film layer disposed on the positive electrode current collector.

The positive electrode current collector may be metal foil, or may be a composite current collector. For example, the positive electrode current collector may be aluminum foil.

The composite current collector may include a polymer material base layer or a metal layer located on at least one surface of the polymer material base layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

The positive electrode film layer includes a positive electrode active material. The positive electrode active material may be a positive electrode active material used in a battery and well known in the art. For example, the positive electrode active material is lithium iron phosphate, a ternary material, or a lithium-rich manganese-based material.

The positive electrode film layer optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

The positive electrode film layer optionally includes a conductive agent. The conductive agent may include at least one of superconducting carbon, acetylene black, carbon black, Ketjen black, carbon dots, carbon nanotubes, graphene, and carbon nanofibers.

### [Negative electrode plate]

The electrode plate 1 in the embodiments of the present application may be a negative electrode plate. The negative electrode plate includes a negative electrode current collector and a negative electrode film layer disposed on the negative electrode current collector.

The negative electrode current collector may be metal foil, or may be a composite current collector. The negative electrode current collector may be copper foil. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

The negative electrode film layer includes a negative electrode active material. The negative electrode active material may be a negative electrode active material used in a battery and well known in the art. In an example, the negative electrode active material may include at least one of the following materials: artificial graphite, natural graphite, soft carbon, hard carbon, a silicon-based material, a tin-based material and lithium titanate, etc. The silicon-based material may include at least one of elemental silicon, a silicon oxide, a silicon-carbon composite, a silicon-nitrogen composite, and a silicon alloy. The tin-based material may include at least one of elemental tin, a tin oxide compound, and a tin alloy. However, the present application is not limited to these materials, and other conventional materials useful as negative electrode active materials for batteries can also be used. These negative electrode active materials may be used alone or in combination of two or more thereof.

the negative film layer optionally includes a conductive agent. The conductive agent may include at least one of superconducting carbon, acetylene black, carbon black, Ketjen black, carbon dots, carbon nanotubes, graphene, and carbon nanofibers.

### [Electrolyte]

The electrolyte plays a role in conducting ions between the positive electrode plate and the negative electrode plate. A type of the electrolyte is not specifically limited in this embodiment of the present application, and may be selected based on requirements. For example, the electrolyte may be liquid, gelled, or all solid.

In some embodiments, the electrolyte is an electrolyte solution. The electrolyte solution includes an electrolyte salt and a solvent.

The electrolyte salt may include at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

The solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfoxide, and diethyl sulfone.

The electrolyte may optionally include a negative electrode film forming additive and a positive electrode film forming additive, and may further include performance additives that can improve certain performance of the battery, such as a performance additive that improves overcharge performance of the battery, and a performance additive that improves battery performance at a high temperature or low temperature.

### [Separator]

The separator is used for separating the positive electrode plate and the negative electrode plate. A type of the separator is not particularly limited in this embodiment of the present application, and any well-known separator with a porous structure having good chemical stability and mechanical stability may be selected.

A material of the separator may include at least one of glass fiber, non-woven fabric, polyethylene, polypropylene, and polyvinylidene fluoride. The separator may be a single-layer film or a multilayer composite film without special limitations. When the separator is a multilayer composite film, materials of the layers may be the same or different without special limitations.

An electrode assembly may be manufactured by the positive electrode plate, the negative electrode plate, and the separator by using a winding process or a laminating process.

### [Battery cell]

An embodiment of the present application provides a battery cell, including the electrode plate 1 in the foregoing embodiment, and/or an electrode plate prepared by using the method in the foregoing embodiment.

The shape of the battery cell is not particularly limited in this embodiment of the present application, and may be cylindrical, square, or any other shape. The battery cell may be a lithium-ion battery, a lithium-sulfur battery, a sodium-ion battery, a magnesium-ion battery, or the like.

FIG. 10 is a schematic diagram of a battery cell according to an embodiment of the present application. For example, as shown in FIG. 10, a battery cell 3 is a square battery cell. The battery cell 3 includes a housing 31, an end cover component 32, and an electrode assembly 33 disposed in the housing 31.

The electrode assembly 33 may be manufactured by the positive electrode plate, the negative electrode plate, and the separator by using a winding process or a laminating process. In some embodiments, the positive electrode plate is the electrode plate 1 in the embodiments of the present application.

The end cover component 32 includes an electrode terminal 322. For example, as shown in FIG. 10, the end cover component 32 includes two electrode terminals 322, where one thereof is a positive electrode terminal, and the other one is a negative electrode terminal.

The battery cell 3 further includes a current collecting member 34, and the current collecting member 34 is configured to connect a tab part 331 of the electrode assembly 33 to the electrode terminal 322. For example, when the electrode plate 1 in this embodiment of the present application is a positive electrode plate, one current collecting member 34 is configured to connect a positive electrode tab (which may also be the tab 102 of the electrode plate 1) to the positive electrode terminal, and the other current collecting member 34 is configured to connect a negative electrode tab to the negative electrode terminal.

In some embodiments, the battery cell can be assembled into a battery module, the number of battery cells contained in the battery module can be one or more, and the specific number can be selected by those skilled in the art according to the application and capacity of the battery module.

### [Battery]

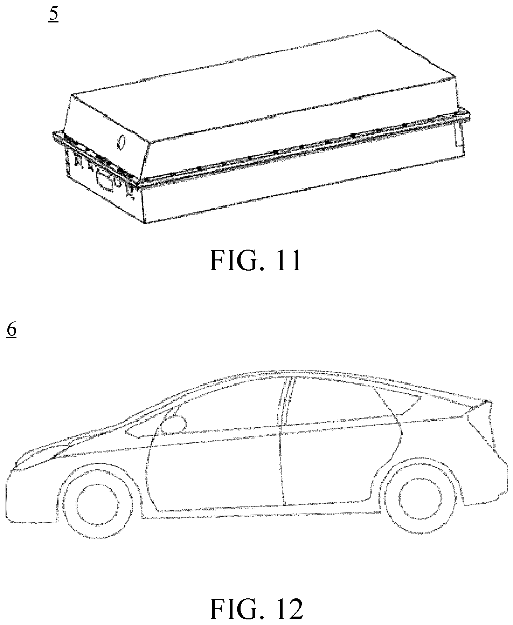

An embodiment of the present application provides a battery, including the battery cell in the foregoing embodiment. FIG. 11 is a schematic diagram of a battery according to an embodiment of the present application. As shown in FIG. 11, a battery 5 may include a plurality of battery cells (which are not shown in the figure).

The battery cells 3 may directly form the battery 5, or may first form a battery module, and then a plurality of battery modules form the battery 5.

### [Power consuming apparatus]

An embodiment of the present application provides a power consuming apparatus, including the battery in the foregoing embodiment.

FIG. 12 is a schematic diagram of a power consuming apparatus according to an embodiment of the present application. As shown in FIG. 12, this embodiment of the present application provides a power consuming apparatus 6, including the battery in the foregoing embodiment.

Optionally, the power consuming apparatus may alternatively be an energy storage apparatus, a lighting apparatus, a spacecraft, or the like. This embodiment of the present application includes, but is not limited thereto.

Examples of the present application are described below. The examples described below are exemplary and only used to explain the present application, and should not be construed as a limitation on the present application. Where specific techniques or conditions are not indicated in the examples, the procedures shall be carried out in accordance with the techniques or conditions described in the literatures in the field or in accordance with the product specification. The used reagents or instruments without manufacturer indicated are all conventional products that may be purchased in the market.

### [Example]

### Example 1

In Example 1, for a structure of the electrode plate 1, refer to FIG. 2. The first insulation layers 121 include the thermoplastic polymer and the binder. The insulation slurry of the first insulation layers 121 includes the thermoplastic-polymer emulsion and the binder. The mass content A of the thermoplastic polymer in the thermoplastic-polymer emulsion in the insulation slurry is 70 wt%, and the mass content B of the binder in the insulation slurry is 30 wt% based on the total mass of the insulation slurry. The thickness d1 of the first insulation layers 121 is 4 µm, and the thickness d3 of a first part 1021 of the tab 102 is 13 µm. The material of the thermoplastic polymer is polyethylene wax, and the melting point is 130 °C.

### Examples 2 to 7

A difference between Examples 2 to 7 and Example 1 lies in that the total thickness of the first insulation layers 121 is different. Correspondingly, the thickness of the second insulation layers 122 is different. For specific parameters, refer to Table 1.

### Examples 8 and 9

A difference between Examples 8 and 9 and Example 1 lies in that the mass content A of the thermoplastic polymer in the insulation slurry of the first insulation layers 121 is different. Correspondingly, the mass content B of the binder in the insulation slurry is also different.

### Examples 10 to 12

A difference between Examples 10 to 12 and Example 1 lies in that the thermoplastic polymer in the thermoplastic-polymer emulsion is different. The thermoplastic polymer in Example 12 is polyester, and a melting point of the polyester is 220 °C.

### Examples 13 to 15

A difference between Examples 13 to 15 and Example 1 lies in that the insulation slurry of the first insulation layers 121 further includes the insulated inorganic particles.

### Example 16

A difference between Example 16 and Example 1 lies in that the binder is different.

### Examples 17 and 18

A difference between Examples 17 and 18 and Example 1 lies in that the ratio k1:k2 of the size k1 of the first part 1021 of the tab 102 to the size k2 of the tab 102 along the first direction is different.

### Example 19

A difference between Example 19 and Example 1 lies in that the insulation slurry of the first insulation layers 121 does not include the thermoplastic polymer, the first insulation layers include the binder and the insulated inorganic particles, the thickness of the first insulation layers 121 is 4 µm, and the electrode plate does not include the second insulation layers 122.

### Examples 20 and 21

A difference between Examples 20 and 21 and Example 14 lies in that the thickness of the first insulation layers is different, and the particle size of the inorganic particles is different. In Example 20 and Example 21, the thickness of the first insulation layers increases, and the particle size of the selected inorganic particles also increases.

### Examples 22 and 23

A difference between Examples 22 and 23 and Example 1 lies in that a single-layer thickness of the tab and the quantity of layers of the tab are different.

### Example 24

A difference between Example 24 and Example 7 lies in that a single-layer thickness of the tab and the quantity of layers of the tab are different.

### Example 25

A difference between Example 25 and Example 1 lies in that a single-layer thickness of the first insulation layers and a single-layer thickness of the tab are different.

### Example 26

A difference between Example 26 and Example 2 lies in that a single-layer thickness of the tab is different.

### Example 27

A difference between Example 27 and Example 5 lies in that the particle size of the thermoplastic polymer is different.

### Example 28

A difference between Example 28 and Example 6 lies in that the particle size of the thermoplastic polymer is different.

In Examples 1 to 28, the first insulation layers 121 on the surfaces of the two sides of the current collector have a same thickness.

### Comparative example 1

A difference between Comparative example 1 and Example 1 lies in that the insulation slurry of the first insulation layers 121 does not include the thermoplastic polymer, a single-side thickness of the first insulation layers 121 is 20 µm (where the total thickness is 40 µm), and the electrode plate does not include the second insulation layers 122. The insulation slurry includes the boehmite and the binder, a mass ratio of the boehmite to the binder is 70:30, and the binder is polyvinylidene fluoride (PVDF).

### Comparative example 2

A difference between Comparative example 2 and Example1 lies in that a single-side thickness of the first insulation layers 121 is 20 µm (where the total thickness is 40 µm).

### Comparative example 3

A difference between Comparative example 3 and Comparative example 1 lies in that a single-layer thickness of the tab is different.

In Table 1, d1 is the thickness of the first insulation layers 121, T is the melting point of the thermoplastic polymer in the first insulation layers 121, A is the mass content of the thermoplastic polymer in the insulation slurry of the first insulation layers 121, B is the mass content of the binder in the insulation slurry of the first insulation layers 121, C is the mass content of the insulated inorganic particles in the insulation slurry of the first insulation layers 121, F is the binding force between the first insulation layers 121 and the current collector 10, d2 is the thickness of the second insulation layers 122, R is the resistance of the second insulation layers 122, and k1:k2 is the ratio of the size k1 of the first insulation layers to the sum k2 of the size of the first insulation layers and the size of the second part 1012 along the first direction.

In Table 2, whether there is a short circuit may reflect a state of the thermoplastic polymer at the end surface, that is, whether the second insulation layers are completely disposed at the end surface, and the short circuit is not caused when the tab is inserted into the electrode assembly.

**Table 1 Parameters of Examples and Comparative examples**

| | First insulation layer | | | | | | | | | | | d2/ nm | R/Ω | k1:k2 | L | Tab | |
|---|---|---|---|---|---|---|---|---|---|---|---|---|---|---|---|---|---|
| | d1 /µm | Insulation slurry | | | | | | | | | F/ N/m | | | | | | |
| | | Thermoplastic-polymer emulsion | | | | Binder | | Insulated inorganic particles | | | | | | | | | |
| | | Thermoplastic polymer | D¹max /µm | T/°C | A/ wt% | Type | B/ wt% | *C*/ wt% | D²max/µm | Dᵥ50/µm | | | | | | d3/ µm | Quantity of layers |
| Example 1 | 4 | Polyethylene wax | 3 | 130 | 70 | Polyacrylonitrile | 30 | / | / | / | 60 | 135 | 86 | 0.5 | 0.308 | 13 | 50 |
| Example 2 | 0.5 | Polyethylene wax | 0.5 | 130 | 70 | Polyacrylonitrile | 30 | / | / | / | 90 | 30 | 15 | 0.5 | 0.038 | 13 | 50 |
| Example 3 | 3 | Polyethylene wax | 3 | 130 | 70 | Polyacrylonitrile | 30 | / | / | / | 65 | 100 | 50 | 0.5 | 0.231 | 13 | 50 |
| Example 4 | 5 | Polyethylene wax | 3 | 130 | 70 | Polyacrylonitrile | 30 | / | / | / | 50 | 160 | 300 | 0.5 | 0.385 | 13 | 50 |
| Example 5 | 6 | Polyethylene wax | 3 | 130 | 70 | Polyacrylonitrile | 30 | / | / | / | 40 | 200 | 500 | 0.5 | 0.462 | 13 | 50 |
| Example 6 | 8 | Polyethylene wax | 3 | 130 | 70 | Polyacrylonitrile | 30 | / | / | / | 30 | 250 | 800 | 0.5 | 0.615 | 13 | 50 |
| Example 7 | 10 | Polyethylene wax | 3 | 130 | 70 | Polyacrylonitrile | 30 | / | / | / | 20 | 350 | 1000 | 0.5 | 0.769 | 13 | 50 |
| Example 8 | 4 | Polyethylene wax | 3 | 130 | 60 | Polyacrylonitrile | 40 | / | / | / | 100 | 120 | 75 | 0.5 | 0.308 | 13 | 50 |
| Example 9 | 4 | Polyethylene wax | 3 | 130 | 80 | Polyacrylonitrile | 20 | / | / | / | 20 | 150 | 200 | 0.5 | 0.308 | 13 | 50 |
| Example 10 | 4 | Polyester with a low melting point | 3 | 100 | 70 | Polyacrylonitrile | 30 | / | / | / | 60 | 140 | 100 | 0.5 | 0.308 | 13 | 50 |
| Example 11 | 4 | Polyamide | 3 | 200 | 70 | Polyacrylonitrile | 30 | / | / | / | 60 | 130 | 80 | 0.5 | 0.308 | 13 | 50 |
| Example 12 | 4 | Polyester | 3 | 220 | 70 | Polyacrylonitrile | 30 | / | / | / | / | / | / | 0.5 | 0.308 | 13 | 50 |
| Example 13 | 4 | Polyethylene wax | 3 | 130 | 50 | Polyacrylonitrile | 40 | 10 | 5 | 2 | 80 | 110 | 65 | 0.5 | 0.308 | 13 | 50 |
| Example 14 | 4 | Polyethylene wax | 3 | 130 | 40 | Polyacrylonitrile | 30 | 30 | 5 | 2 | 65 | 100 | 50 | 0.5 | 0.308 | 13 | 50 |
| Example 15 | 0.5 | Polyethylene wax | 0.5 | 130 | 40 | Polyacrylonitrile | 20 | 40 | 1 | 0.5 | 75 | 10 | 1 | 0.5 | 0.308 | 13 | 50 |
| Example 16 | 4 | Polyethylene wax | 3 | 130 | 70 | Polyacrylic acid | 30 | / | / | / | 60 | 135 | 86 | 0.5 | 0.308 | 13 | 50 |
| Example 17 | 4 | Polyethylene wax | 3 | 130 | 70 | Polyacrylonitrile | 30 | / | / | / | 60 | 135 | 86 | 0.3 | 0.308 | 13 | 50 |
| Example 18 | 4 | Polyethylene wax | 3 | 130 | 70 | Polyacrylonitrile | 30 | / | / | / | 60 | 135 | 86 | 0.4 | 0.308 | 13 | 50 |
| Example 19 | 4 | / | / | / | / | Polyacrylonitrile | 30 | 70 | 3 | 1 | / | / | / | 0.5 | 0.308 | 13 | 50 |
| Example 20 | 10 | Polyethylene wax | 3 | 130 | 40 | Polyacrylonitrile | 30 | 30 | 10 | 6 | 40 | 200 | 500 | 0.5 | 0.769 | 13 | 50 |
| Example 21 | 6 | Polyethylene wax | 3 | 130 | 40 | Polyacrylonitrile | 30 | 30 | 6 | 2 | 65 | 100 | 50 | 0.5 | 0.462 | 13 | 50 |
| Example 22 | 4 | Polyethylene wax | 3 | 130 | 70 | Polyacrylonitrile | 30 | / | / | / | 60 | 135 | 86 | 0.5 | 0.400 | 10 | 120 |
| Example 23 | 4 | Polyethylene wax | 3 | 130 | 70 | Polyacrylonitrile | 30 | / | / | / | 60 | 135 | 86 | 0.5 | 0.267 | 15 | 50 |
| Example 24 | 10 | Polyethylene wax | 3 | 130 | 70 | Polyacrylonitrile | 30 | / | / | / | 20 | 350 | 1000 | 0.5 | 1.000 | 10 | 50 |
| Example 25 | 13 | Polyethylene wax | 3 | 130 | 70 | Polyacrylonitrile | 30 | / | / | / | 18 | 400 | 1200 | 0.5 | 1.300 | 10 | 50 |
| Example 26 | 0.5 | Polyethylene wax | 0.5 | 130 | 70 | Polyacrylonitrile | 30 | / | / | / | 90 | 30 | 15 | 0.5 | 0.033 | 15 | 50 |
| Example 27 | 6 | Polyethylene wax | 6 | 130 | 70 | Polyacrylonitrile | 30 | / | / | / | 40 | 200 | 500 | 0.5 | 0.462 | 13 | 50 |
| Example 28 | 10 | Polyethylene wax | 10 | 130 | 70 | Polyacrylonitrile | 30 | / | / | / | 20 | 350 | 1000 | 0.5 | 0.769 | 13 | 50 |
| Comparative example 1 | 20 | / | / | / | / | Polyvinylidene fluoride | 30 | 70 | 3 | 1 | 10 | / | / | 0.5 | 1.538 | 13 | 50 |
| Comparative example 2 | 20 | Polyethylene wax | 5 | 130 | 70 | Polyacrylonitrile | 30 | / | / | / | 40 | 500 | 2000 | 0.5 | 1.538 | 13 | 50 |
| Comparative example 3 | 20 | / | / | / | / | Polyvinylidene fluoride | 30 | 70 | 3 | 1 | 10 | / | / | 0.5 | 1.333 | 15 | 50 |

**Table 2 Experimental results of Comparative examples and Examples**

| | Whether a tab is inserted into an electrode assembly | Whether there is a polymer on an end surface | Whether a short circuit occurs when a fully-charged anode is overlapped |
|---|---|---|---|
| Example 1 | Not inserted | Yes | No short circuit |
| Example 2 | Not inserted | Yes | No short circuit |
| Example 3 | Not inserted | Yes | No short circuit |
| Example 4 | Not inserted | Yes | No short circuit |
| Example 5 | Not inserted | Yes | No short circuit |
| Example 6 | Not inserted | Yes | No short circuit |
| Example 7 | Not inserted | Yes | No short circuit |
| Example 8 | Not inserted | Yes | No short circuit |
| Example 9 | Not inserted | Yes | No short circuit |
| Example 10 | Not inserted | Yes | No short circuit |
| Example 11 | Not inserted | Yes | No short circuit |
| Example 12 | Not inserted | Yes in a part of positions | Short circuit occurs in a part of positions |
| Example 13 | Not inserted | Yes | No short circuit |
| Example 14 | Not inserted | Yes | No short circuit |
| Example 15 | Not inserted | Yes | No short circuit |
| Example 16 | Not inserted | Yes | No short circuit |
| Example 17 | Not inserted | Yes | No short circuit |
| Example 18 | Not inserted | Yes | No short circuit |
| Example 19 | Not inserted | No | Short circuit |
| Example 20 | Not inserted | Yes | No short circuit |
| Example 21 | Not inserted | Yes | No short circuit |
| Example 22 | Not inserted | Yes | No short circuit |
| Example 23 | Not inserted | Yes | No short circuit |
| Example 24 | Not inserted | Yes | No short circuit |
| Example 25 | Not inserted | Yes | No short circuit |
| Example 26 | Not inserted | Yes | No short circuit |
| Example 27 | Not inserted | Yes | No short circuit |
| Example 28 | Not inserted | Yes | No short circuit |
| Comparative example 1 | Inserted | No | Short circuit |
| Comparative example 2 | Inserted | Yes | No short circuit |
| Comparative example 3 | Inserted | No | Short circuit |

### [Preparation of a battery cell]

### (1) Configure insulation slurry

Thermoplastic-polymer emulsion, insulated inorganic particles (optional), and a binder were mixed according to a certain ratio, a solvent was added, and mixing was uniformly performed, where a viscosity of the slurry was approximately 300 mPa·s. The solvent was water. For a specific thermoplastic polymer and the ratio of the thermoplastic-polymer emulsion, a dispersant (or the insulated inorganic particles), and the binder, refer to Table 1.

### (2) Coating and drying

The insulation slurry was coated on aluminum foil in a manner of intaglio coating, where a coating width was 10 mm, and a width reserved to prepare a tab empty foil was 30 µm. Drying was performed by using an oven, where a drying temperature was 100 °C. For a thickness of first insulation layers after the drying, refer to Table 1. Subsequently, positive electrode slurry was uniformly coated on the aluminum foil, and drying was performed in the oven of 100 °C, to obtain a positive electrode active material layer. A positive electrode active material in the positive electrode slurry was lithium iron phosphate.

### (3) Laser die-cutting

The foregoing product was rolled and cut by using laser, to obtain a positive electrode plate, where a power of the laser was 20 W, a frequency was 100 kHz, and a ribbon conveying speed was 30 m/min.

### (4) Preparation of a battery cell

The foregoing positive electrode plate, separator, and negative electrode plate were sequentially laminated, so that the separator was located between the positive electrode plate and the negative electrode plate and can separate the positive electrode plate from the negative electrode plate. Then, the laminated components were wound and disposed into a housing, drying was performed, and an electrolyte solution was injected, to obtain a lithium-ion battery cell after encapsulation.

It should be noted that, for Example19 and Comparative example 1, the insulation slurry does not include the thermoplastic-polymer emulsion. For Comparative example 1, Comparative example 2, and Comparative example 3, the first insulation layers are not prepared in the manner of intaglio coating, but are prepared in a manner of extrusion coating.

### [Confirmation of the first insulation layers]

A surface of the electrode plate was observed by using a scanning electron microscope, to determine whether the first insulation layers exist on the surface. The electrode plate was sectioned, a cross section of the electrode plate was shot by using the scanning electron microscope, and the thickness of the first insulation layers is observed based on a shot photograph.

### [Confirmation of the second insulation layers]

An end surface was observed by using a scanning electron microscope (SEM), to determine whether the second insulation layers exist at the end surface. In addition, the thickness of the second insulation layers may further be observed by using a photograph shot by using the scanning electron microscope.

### [Test of overlapping a fully-charged anode]

The end surface obtained after the laser die-cutting overlapped the fully-charged anode, to observe whether there is a short circuit.

### [Test of inserting the tab into the electrode assembly]

Whether the tab in the battery cell is inserted into the electrode assembly was detected by using a computed tomography (CT) scan technology.

### [Test of the binding force]

A plate-shaped material having a flat surface was selected as a first substrate, one side of a double-sided adhesive tape was pasted on a surface of the first substrate, and the other side of the double-sided adhesive tape was pasted on the first insulation layers on one side of the electrode plate. A plate having an adhesive coating region was selected as a second substrate, and the second substrate was pasted to the first insulation layers on the other side of the electrode plate. In this case, the electrode plate is located between the first substrate and the second substrate. Same sides of the first substrate and the second substrate were respectively fixed to a lower end and an upper end of a universal tensile testing machine for a tensile test. After a force-relative displacement curve displayed on the universal tensile testing machine runs stationary, a tensile-force value and a displacement value were recorded, and a segment of the curve that was stationary was selected to calculate the binding force, where the binding force=the tensile-force value/the displacement value.

### [Test of the resistance of the second insulation layers]

The resistance of the second insulation layers may be measured by using an ohmmeter.

For example, one end of the ohmmeter was connected to a tab (specifically, a part of the tab on which the first insulation layers were not coated) of the positive electrode plate in this embodiment, the other end of the ohmmeter is connected to a tab of the negative electrode plate, and the negative electrode plate overlaps an end surface of the positive electrode plate.

### [Test of the particle size]

The volume particle size distribution Dv50 may be determined by using a particle-size analyzer by using a laser diffraction method. Specifically, refer to the standard GB/T19077-2016, measurement was performed by using a laser diffraction particle-size analyzer according to the specification of the manufacturer. For example, before the slurry was prepared, a proper quantity of the inorganic particles or the thermoplastic polymer were selected, and the volume average particle size of the material is measured by using a MasterSizer 2000 (MasterSizer 2000) laser particle-size analyzer. A proper quantity of to-be-tested samples (provided that it is ensured that a sample concentration has a shading rate ranging from 8% to 12%) were obtained, 20 ml of deionized water was added, and outer sonication was simultaneously performed for 5 min (53 KHz/120 W), to ensure that the samples were completely dispersed. Then, the samples were measured according to the GB/T19077-2016/ISO 13320:2009 standard. Then, Dmax may be calculated based on DV50 or may be obtained based on an instrument.

For another example, the electrode plate may be tested by using a scanning electron microscope, to obtain an image of a region of the first insulation layers of the electrode plate. The particle size of the thermoplastic polymer or the inorganic particles was measured based on the image.

### [Confirmation of the melting point of the thermoplastic polymer]

The melting point of the thermoplastic polymer may be determined by using a differential scanning calorimeter (DSC) device. Specifically, in an example, 8 mg of samples was put into the DSC device, and a temperature was increased under a condition of an atmosphere of N2 and a flow rate of 50 ml/min, where a temperature increasing rate was 10 °C/min, and a cut-off temperature was 400 °C, to measure the melting point of the thermoplastic polymer.

For another example, the melting point of the thermoplastic polymer may be determined after a specific type of the thermoplastic polymer was determined and based on the specific thermoplastic polymer. In an example, for a crystalline thermoplastic polymer, the melting point refers to a melting point of the crystalline thermoplastic polymer. For a non-crystalline thermoplastic polymer, the melting point refers to a glass transition temperature of the non-crystalline thermoplastic polymer.

### [Mass ratio of the thermoplastic polymer, the inorganic particles, and the binder]

The mass ratio may be obtained based on the masses of the thermoplastic-polymer emulsion, the inorganic particles, and the binder that are added in the preparation process.

In addition, the thermoplastic polymer, the binder, and the inorganic particles in the electrode plate may alternatively be determined in the following manner.

The first insulation layers are scraped down by using a knife, to form powers or a block. Approximately 1 g of a film-layer sample was disposed in a die and is heated to the melting point of the thermoplastic polymer, so that a thin film can be made, an infrared test (FTIR) was performed, and a type of the polymer therein was determined based on a characteristic peak. Alternatively, the film-layer sample was heated from a room temperature to 600 °C by using thermogravimetric analysis (TG-FTIR), and film compositions were determined based on a thermal decomposition temperature, a weight loss ratio, and a product composition of the film-layer sample.

With reference to Examples 1 to 28 and Comparative examples 1 and 2, when the ratio of the thickness of the first insulation layers to the thickness of the first part of the tab is less than or equal to 1.3, the thickness of the first insulation layers is small, and the sum of the thicknesses of the first insulation layers and the first part is small. When the quantity of layers of the tab is large, the tab is not inserted into the electrode assembly. Therefore, this embodiment of the present application can reduce a risk that the tab is inserted into the electrode assembly.

With reference to Examples 1 to 7, as the thickness of the first insulation layers increases, the thickness of the second insulation layers also gradually increases, and the binding force between the current collector and the first insulation layers gradually decreases. The thickness of the first insulation layers is properly set, so that the second insulation layers with an appropriate thickness can be obtained, and an appropriate resistance is set for the second insulation layers. In addition, when the thickness of the first insulation layers is not less than 0.5 µm, preparation of the first insulation layers is facilitated, and a risk that the current collector is bare due to excessively thin first insulation layers can be reduced. In addition, the uniform second insulation layers can further be obtained, thereby reducing a risk that the second insulation layers exist in a part of positions of the end surface. In addition, with reference to Examples 25 and 26 and Examples 1 to 7, preparation of the first insulation layers is facilitated by properly setting the particle size of the thermoplastic polymer.

With reference to Examples 8 and 9, as the mass content of the thermoplastic polymer increases, during the cutting, more thermoplastic polymers are melted and flow to the end surface, so that the second insulation layers have a larger thickness. As the mass content of the thermoplastic polymer increases, the mass content of the binder that can be added decreases. When the mass content of the binder decreases, the binding force between the current collector and the first insulation layers decreases. The mass content of the thermoplastic polymer is properly set, so that the second insulation layers have an appropriate thickness. The mass content of the binder is properly set, so that an appropriate binding force exists between the current collector and the first insulation layers.

With reference to Examples 10 and 11, the embodiments of the present application are applicable to different thermoplastic polymers. With reference to Examples 12, in a case in which the melting point of the thermoplastic polymer is high, it is difficult for the thermoplastic polymer to be completely melted, and more heat is required for the thermoplastic polymer to be melted. Therefore, the thermoplastic polymer exists in a part of positions of the end surface. When the end surface overlaps with the negative electrode plate, a short circuit occurs at the part of the positions.

With reference to Examples 13 to 15, the inorganic particles are added to the insulation slurry, and the mass content of the inorganic particles is properly set, so that the current collector is not bare because the first insulation layers are excessively thin. Preparation of the first insulation layers is facilitated by properly setting the particle size of the inorganic particles.

With reference to Example 16, this embodiment of the present application is applicable to a plurality of types of binders. Proper matching between the binder and the thermoplastic polymer facilitates preparation and coating of the slurry of the first insulation layers, and facilitates preparation of the first insulation layers.

With reference to Examples 17 and 18, the embodiments of the present application are applicable to an electrode plate in which k1:k2 ranges from 0.3 to 0.5.

With reference to Example 19, although no thermoplastic polymer is added, because the first insulation layers have a small thickness, the tab is not inserted into the electrode assembly.

With reference to Examples 20 and 21, the maximum particle size of the inorganic particles does not exceed the thickness of the first insulation layers, so that a risk that a scratch occurs in a process of preparing the first insulation layers because the inorganic particles are excessively large can be reduced. Preparation of the first insulation layers is facilitated by properly setting the particle size of the inorganic particles.

As the quantity of layers of the tab increases, the total thickness of the tab gradually increases, and difficulty in bending the tab increases. Consequently, a risk that a part of the tab is inserted into the electrode assembly after the tab is bent increases. In this embodiment of the present application, with reference to Examples 22 to 24 and Examples 27 and 28, when there is a large quantity of layers of the tab, the tab in this embodiment of the present application is not inserted into the electrode assembly.

It should be noted that the foregoing Examples and Comparative examples are described by using the positive electrode plate whose current collector is the aluminum foil. The embodiments of the present application are also applicable to a positive electrode plate and a negative electrode plate whose current collector is another material. In addition, although data descriptions are provided only by using an example in which the first insulation layers on the surfaces of the two sides of the current collector have the same thickness, the solution of the present application is still applicable to a case in which the first insulation layers have different thicknesses. The table only shows values of a part of L. When the thickness of the first insulation layers and the thickness of the first part of the tab (or the current collector) change, a ratio of L also changes.

It should be noted that the present application is not limited to the embodiments above. The above-described embodiments are merely exemplary, and embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

## Claims

1. An electrode plate, comprising a current collector and first insulation layers,
wherein
the current collector comprises a main body part and a tab, the tab extends from a first end of the main body part, the first end is one end of the main body part along a first direction, the tab comprises a first part and a second part, the first part is closer to the main body part than the second part, the first insulation layers are disposed on surfaces of two sides of the first part, and a ratio L of a thickness of the first insulation layers to a thickness of the first part satisfies: L≤1.3.

2. The electrode plate according to claim 1, wherein the ratio L of the thickness of the first insulation layers to the thickness of the first part satisfies: L≤1; optionally, L satisfies: 1/30≤L≤1; and optionally, L satisfies: 4/13≤L≤6/13.

3. The electrode plate according to claim 1 or 2, wherein the thickness d1 of the first insulation layers satisfies: d1≤10 µm; optionally, d1 satisfies: 0.5 µm≤d1≤10 µm; and optionally, d1 satisfies: 4 µm≤d1≤6 µm.

4. The electrode plate according to any one of claims 1 to 3, wherein the first insulation layers on the surfaces of the two sides of the first part have a same thickness.

5. The electrode plate according to any one of claims 1 to 4, wherein the main body part comprises a coating region and a transition region, the transition region is disposed between the coating region and the tab, and the first insulation layers are disposed on surfaces of two sides of the transition region.

6. The electrode plate according to claim 5, wherein the electrode plate further comprises an active material layer, and the active material layer is disposed on a surface of at least one side of the coating region.

7. The electrode plate according to any one of claims 1 to 6, wherein the first insulation layers comprise a thermoplastic polymer.

8. The electrode plate according to claim 7, wherein a maximum particle size D¹ₘₐₓ of the thermoplastic polymer satisfies: D¹ₘₐₓ≤10 µm; and optionally, D¹ₘₐₓ satisfies: D¹ₘₐₓ≤6 µm.

9. The electrode plate according to claim 7 or 8, wherein the first insulation layers further comprise a binder; and optionally, a mass content A of the thermoplastic polymer satisfies: 40 wt%≤A≤80 wt%, and a mass content B of the binder satisfies: 20 wt%≤B≤40 wt% based on a total mass of the first insulation layers.

10. The electrode plate according to any one of claims 7 to 9, wherein the first insulation layers further comprise inorganic particles; optionally, the inorganic particles comprise insulated inorganic particles; and optionally, the insulated inorganic particles comprise at least one of boehmite and aluminum oxide.

11. The electrode plate according to claim 10, wherein a mass content C of the inorganic particles satisfies: 0<C≤40 wt% based on the total mass of the first insulation layers; and optionally, C satisfies: 30 wt%≤B≤40 wt%.

12. The electrode plate according to claim 10 or 11, wherein a maximum particle size D²max of the inorganic particles satisfies: D²max≤10 µm; and optionally, D²max satisfies: D²max≤6 µm.

13. The electrode plate according to any one of claims 10 to 12, wherein a volume particle size distribution Dv50 of the inorganic particles satisfies: 0.5 µm≤Dv50≤6 µm; and optionally, the volume particle size distribution Dv50 of the inorganic particles satisfies: 0.5 µm≤Dv50≤2 µm.

14. The electrode plate according to any one of claims 7 to 13, wherein a melting point T of the thermoplastic polymer satisfies: 100 °C≤T≤200 °C; and optionally, T satisfies: 100 °C≤T≤130 °C.

15. The electrode plate according to any one of claims 7 to 14, wherein the thermoplastic polymer comprises at least one of polystyrene, polyolefin, polyimide, polyester, polyphenylene sulfide, aromatic polyamide, polyamide, a copolymer of butyl acrylate and ethyl methacrylate, and respective modified polymers; and optionally, the polyolefin comprises polyethylene wax.

16. The electrode plate according to any one of claims 7 to 15, wherein the binder comprises at least one of a polyacrylic acid-polyacrylonitrile copolymer, a polyacrylate-polyacrylonitrile copolymer, polyether acrylate, polyacrylic acid, polyacrylonitrile, gelatin, chitosan, and sodium alginate.

17. The electrode plate according to any one of claims 1 to 16, wherein a binding force F between the first insulation layers and the current collector satisfies: 20 N/m≤F≤100 N/m; and optionally, F satisfies: 60 N/m≤F≤90 N/m.

18. The electrode plate according to any one of claims 1 to 17, wherein a ratio of a size k1 of the first insulation layers to a sum k2 of the size of the first insulation layers and a size of the second part along the first direction satisfies: 0.3≤k1:k2≤0.5.

19. The electrode plate according to any one of claims 1 to 18, wherein the electrode plate further comprises second insulation layers, the second insulation layers are disposed on a first end surface, and the first end surface is an end surface of the main body part at the first end.

20. The electrode plate according to claim 19, wherein a thickness d2 of the second insulation layers ranges from 10 nm to 400 nm; and optionally, the thickness d2 of the second insulation layers ranges from 100 nm to 200 nm.

21. The electrode plate according to claim 18 or 19, wherein a resistance R of the second insulation layers satisfies: R≥1 Ω; and optionally, R satisfies: 50 Ω≤R≤500 Ω.

22. The electrode plate according to any one of claims 19 to 21, wherein the second insulation layers are disposed on the first end surface and a second end surface, the second end surface is an end surface of two ends of the first part along a second direction, and the second direction is different from the first direction; and optionally, the second direction is perpendicular to the first direction.

23. The electrode plate according to any one of claims 19 to 22, wherein a material of the second insulation layers is the same as a material of the thermoplastic polymer in the first insulation layers.

24. The electrode plate according to any one of claims 19 to 23, wherein a thermoplastic polymer in the second insulation layers is in a film-layer shape.

25. The electrode plate according to any one of claims 1 to 24, wherein a quantity of layers of the tab is greater than or equal to 50; and optionally, a thickness d3 of a first part of each layer of the tab satisfies: 10 µm≤d3≤15 µm.

26. The electrode plate according to any one of claims 1 to 25, wherein the electrode plate comprises a positive electrode plate; and optionally, the current collector comprises aluminum foil.

27. The electrode plate according to claim 26, wherein the positive electrode plate comprises a positive electrode active material, and the positive electrode active material comprises at least one of lithium transition metal oxide and lithium-containing phosphate in an olivine structure; optionally, the lithium-containing phosphate in the olivine structure comprises lithium iron phosphate; and optionally, the lithium transition metal oxide comprises LiNi_{0.8}Co_{0.1}Mn_{0.1}O₂.

28. A preparation method for an electrode plate, wherein the method comprises:
coating insulation slurry in a first region of a current collector, to form first insulation layers in the first region, wherein a ratio L of a thickness d1 of the first insulation layers to a thickness of a first part satisfies: L≤1.3; and
cutting, along cutting lines, the current collector on which the first insulation layers are disposed, wherein at least a part of the cutting lines are disposed in the first region.

29. The method according to claim 28, wherein the ratio L of the thickness d1 of the first insulation layers to the thickness of the first part satisfies: L≤1; optionally, L satisfies: 1/30≤L≤1; and optionally, L satisfies: 4/13≤L≤6/13.

30. The method according to claim 28 or 29, wherein the thickness d1 of the first insulation layers satisfies: d1≤10 µm; optionally, 0.5 µm<d1<10 µm; and optionally, d1 satisfies: 4 µm≤d1≤6 µm.

31. The method according to any one of claims 28 to 30, wherein the insulation slurry comprises a thermoplastic-polymer emulsion and a binder; and optionally, a mass content A of a thermoplastic polymer in the thermoplastic-polymer emulsion in the insulation slurry satisfies: 40 wt%≤A≤80 wt%, and a mass content B of the binder satisfies: 20 wt%≤B≤40 wt% based on a total mass of the insulation slurry.

32. The method according to claim 31, wherein a maximum particle size D¹ₘₐₓ of the thermoplastic polymer in the thermoplastic-polymer emulsion satisfies: D¹ₘₐₓ≤10 µm; and optionally, D¹ₘₐₓ satisfies: D¹ₘₐₓ≤6 µm.

33. The method according to claim 31 or 32, wherein the insulation slurry further comprises inorganic particles; optionally, the inorganic particles comprise insulated inorganic particles; and optionally, the insulated inorganic particles comprise at least one of boehmite and aluminum oxide.

34. The method according to claim 33, wherein a mass content C of the inorganic particles in the insulation slurry satisfies: 0<C≤40 wt%; and optionally, C satisfies: 30 wt%≤B≤40 wt%.

35. The method according to claim 33 or 34, wherein a maximum particle size D²ₘₐₓ of the inorganic particles satisfies: D²ₘₐₓ≤10 µm; and optionally, D²ₘₐₓ satisfies: D²ₘₐₓ≤6 µm.

36. The method according to any one of claims 33 to 35, wherein a volume particle size distribution Dv50 of the inorganic particles satisfies: 0.5 µm≤Dv50≤6 µm; and optionally, the volume particle size distribution Dv50 of the inorganic particles satisfies: 0.5 µm≤Dv50≤2 µm.

37. The method according to any one of claims 31 to 36, wherein a melting point T of the thermoplastic polymer in the thermoplastic-polymer emulsion satisfies: 100 °C≤T≤200 °C; and optionally, T satisfies: 100 °C≤T≤130 °C.

38. The method according to any one of claims 31 to 37, wherein the thermoplastic polymer comprises at least one of polystyrene, polyolefin, polyimide, polyester, polyphenylene sulfide, aromatic polyamide, polyamide, a copolymer of butyl acrylate and ethyl methacrylate, and respective modified polymers; and optionally, the polyolefin comprises polyethylene wax.

39. The method according to any one of claims 31 to 38, wherein the binder comprises at least one of a polyacrylic acid-polyacrylonitrile copolymer, a polyacrylate-polyacrylonitrile copolymer, polyether acrylate, polyacrylic acid, polyacrylonitrile, gelatin, chitosan, and sodium alginate.

40. The method according to any one of claims 28 to 39, wherein the coating insulation slurry in a first region of a current collector, to form first insulation layers in the first region comprises:
coating the insulation slurry in the first region of the current collector in a manner of intaglio coating, to form the first insulation layers in the first region.

41. The method according to any one of claims 28 to 40, wherein the method further comprises:
after the insulation slurry is coated in the first region of the current collector, to form the first insulation layers in the first region, coating an active material in a second region of the current collector, to form an active material layer in the second region.

42. The method according to any one of claims 28 to 41, wherein the cutting, along cutting lines, the current collector on which the first insulation layers are disposed comprises:
controlling a laser processing tool to cut, along the cutting lines, the current collector on which the first insulation layers are disposed.

43. A battery cell, comprising the electrode plate according to any one of claims 1 to 27, and/or an electrode plate prepared by using the method according to any one of claims 28 to 42.

44. A battery, comprising the battery cell according to claim 43.

45. A power consuming apparatus, comprising the battery according to claim 44.
